# EUROPEAN PATENT SPECIFICATION

(11) **EP 2 484 526 B1**
(45) Date of publication and mention of the grant of the patent: **22.03.2017**
(21) Application number: 12154078.5
(22) Date of filing: 06.02.2012
(51) Int. Cl.: B41J 2/14, B41J 2/16, C09D 11/10, C09D 11/101, C09D 11/30

(54) **INKJET RECORDING METHOD AND PRINTED MATERIAL**
TINTENSTRAHLAUFZEICHNUNGSVERFAHREN UND GEDRUCKTES MATERIAL
PROCÉDÉ D'ENREGISTREMENT PAR JET D'ENCRE ET MATÉRIAU IMPRIMÉ

(30) Priority: 08.02.2011 JP 2011025055; 30.01.2012 JP 2012017084
(43) Date of publication of application: 08.08.2012
(73) Proprietor: Fujifilm Corporation, Minato-ku Tokyo (JP)
(72) Inventor: Hayata, Yuuichi, Ashigarakami-gun, Kanagawa (JP)
(74) Representative: Höhfeld, Jochen

(56) References cited:
- EP-A1- 2 412 765
- EP-A2- 2 412 768
- WO-A1-2009/045703
- WO-A1-2011/027162
- WO-A2-2010/051247
- US-A1- 2008 225 099

## Description

### BACKGROUND OF THE INVENTION

### 1. Field of the Invention

The present invention relates to an inkjet recording method and a printed material.

### 2. Description of the Related Art

As an image recording method for forming an image on a recording medium such as paper and the like based on an image data signal, there are an electrophotographic system, sublimation type and melt type thermal transfer systems, an inkjet system, and the like.

With regard to the inkjet system, the printing equipment is inexpensive, it is not necessary to use a plate when printing. And since an image is formed directly on a recording medium by discharging an ink composition only on a required image area, the ink composition can be used efficiently in the inkjet system. And the running costs of the inkjet system are low, particularly in the case of small lot production. In addition, since the inkjet system has low noise and is excellent as an image recording system, the inkjet system has been attracting attention in recent years.

For the inkjet system, an inkjet recording ink composition (radiation-curable inkjet recording ink composition), which is curable by irradiation with radiation such as ultraviolet rays and the like, is an excellent system from the viewpoint of it being possible to print on various types of recording media because, compared with a solvent-based ink composition, the drying properties are excellent and an image is resistant to spreading since the majority of the components in the ink composition is curable by irradiation with radiation such as ultraviolet rays and the like.

Examples of a conventional inkjet recording ink composition that is curable by irradiation with radiation include the ink compositions disclosed in JP2010-70754A and JP2009-84441A.

Furthermore, examples of conventional inkjet head used for discharging the ink composition include an inkjet head disclosed in the specification of U.S. Pat. No. 7,011,396.

### SUMMARY OF THE INVENTION

A printed material obtained by radiation-curable inkjet printing system has suffered from a problem that it has low glossiness of a cured film and marked stripe unevenness, as compared with a printed material obtained by an aqueous inkjet or a solvent inkjet. Further, in the case where an ink composition is discharged, there has been a problem that decoloration due to nozzle clogging occurs.

An object of the present invention is to provide a radiation-curable inkjet recording method, which can provide an excellent image having high glossiness and no marked image stripe unevenness, and being free from decoloration due to nozzle clogging, and a printed material prepared by the inkjet recording method.

An inkjet recording method of the present invention which is capable of solving the above-described problems includes an image-forming step wherein an ink composition containing a compound represented by the formula (1) (Component A-1) and a polymerization initiator (Component B), and having a surface tension at 25°C of 34.0 to 39.0 mN/m, is discharged onto a recording medium from an inkjet head having a nozzle plate wherein the ink discharging side surface of the nozzle plate has been subjected to an ink-philic treatment, to form an image; and a curing step wherein the discharged ink composition is irradiated with actinic radiation. 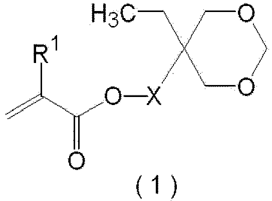 (in the formula (1), R¹ represents a hydrogen atom or a methyl group, and X represents a single bond or a divalent linkage.)

In the present invention, it is a preferred embodiment that the ink composition further contains an N-vinyllactam (Component A-2), or the ink composition further contains a diacrylate of a hydrocarbon diol having 5 to 10 carbon atoms (Component A-3), and the ejection volume of the ink composition in the image-forming step is not smaller than 7 pL and not larger than 100 pL (more preferably not smaller than 7 pL and not larger than 40 pL).

Furthermore, in the present invention, it is another preferred embodiment that the discharge frequency in the image-forming step is 8 to 80 kHz or the image formation in the image-forming step is gray-scale printing in which a plurality of the ink compositions having different ejection volumes is discharged in combination, the ejection volume varies in 3 stages to 8 stages, and the image formation in the image-forming step is carried out in a shuffle scanning mode for operating an inkjet head in both directions.

Furthermore, in the present invention, it is a still another preferred embodiment that the nozzle plate includes a layer formed of at least one selected from the group consisting of diamond-like carbon, metal, semi-metal oxide, metal oxide, semi-metal nitride, and metal nitride on at least a part of the ink discharging side surface; the nozzle plate includes a layer formed of at least one selected from the group consisting of gold, iron, stainless steel, titanium, tantalum, platinum, rhodium, nickel, chromium, silicon oxide, silicon nitride, and aluminum nitride on at least a part of the ink discharging side surface; the nozzle plate includes a layer formed of at least one selected from the group consisting of gold, stainless steel, and silicon oxide on at least a part of the ink discharging side surface; the nozzle plate includes a layer formed of at least one selected from the group consisting of gold and silicon oxide on at least a part of the ink discharging side surface; and the nozzle plate includes a layer formed of gold on at least a part of the ink discharging side surface.

The present invention includes a printed material recorded by the inkjet recording method.

According to the present invention, a radiation-curable inkjet recording method, which can provide an excellent image having high glossiness and no marked image stripe unevenness, and being free from decoloration due to nozzle clogging; and a printed material prepared by the inkjet recording method can be provided.

### BRIEF DESCRIPTION OF THE DRAWINGS

Fig. 1 is a schematic view showing a cross-sectional surface of a nozzle plate on which a silicon oxide film is formed.
Fig. 2 is a schematic view showing a cross-sectional surface of a nozzle plate from which a silicon oxide film is removed.
Fig. 3 is a schematic view showing a cross-sectional surface of a nozzle plate on which a protective layer is formed.
Fig. 4 is a schematic view showing a cross-sectional surface of a nozzle plate on which a metal layer is formed.
Fig. 5 is a schematic view showing the ink discharging side surface of a nozzle plate on which a metal layer is formed.

### DESCRIPTION OF THE PREFERRED EMBODIMENTS

An inkjet recording method of the present invention obtained by solving the above-described problems includes an image-forming step, in which an ink composition containing a compound represented by the formula (1) (Component A-1) and a polymerization initiator (Component B), and having a surface tension at 25°C of 34.0 to 39.0 mN/m, is discharged onto a recording medium from an inkjet head having a nozzle plate, wherein the ink discharging side surface of the nozzle plate has been subjected to an ink-philic treatment, to form an image; and a curing step, in which the discharged ink composition is irradiated with actinic radiation.

Furthermore, in the specification, the description of "X to Y" specifying a numerical range has the same meaning as the expression "not less than X and not more than Y". Further, the expression "the compound of the formula (1) (Component A-1)" or the like may be simply referred to as the expression "Component A-1" or the like. Hereinafter, the present invention will be described in detail.

### I. Ink Composition

First, the ink composition used in the present invention (which may hereinafter be referred to as "the ink composition of the present invention") will be described in detail.

### (Inkjet Ink Composition)

The inkjet ink composition of the present invention (which may hereinafter also be simply referred to as the "ink composition") contains a compound represented by the formula (1) (Component A-1) and a polymerization initiator (Component B), and has a surface tension at 25°C of 34.0 to 39.0 mN/m. 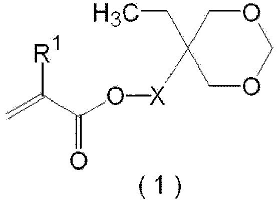 (in the formula (1), R¹ represents a hydrogen atom or a methyl group, and X represents a single bond or a divalent linking group.)

The ink composition of the present invention is an oily ink composition that is curable upon irradiation with actinic radiation. The "actinic radiation" is a radiation that can provide energy that generates an initiating species in the ink composition by the irradiation, and examples thereof include α rays, γ rays, X-rays, ultraviolet rays, visible light, an electron beam, and the like. Among them, ultraviolet rays and an electron beam are preferable from the viewpoints of curing sensitivity and the availability of equipment, and ultraviolet rays are more preferable.

Furthermore, since the radiation-curable ink composition is cured after the ink composition is applied on a recording medium, the ink composition is preferably not to contain a high volatile solvent, and more preferably not to contain a solvent. This is because, if the high volatile solvent remains in the cured ink image, the solvent resistance is degraded and the VOC (Volatile Organic Compounds) problem of the residual high volatile solvent occurs.

The printed material obtained by the actinic radiation-curable inkjet printing system has low glossiness of a cured film and marked stripe unevenness, as compared with printed materials obtained by an aqueous inkjet or a solvent inkjet. It is thought that one of the causes therefor is the shape of the ink composition when landing being retained since the ejected ink composition is cured by actinic radiation immediately after the landing.

On the other hand, with the ink composition of the present invention, a printed material having no marked stripe unevenness and excellent glossiness can be obtained. Although the reason thereof is not clear, it is presumed that the discharged ink composition containing Component A-1 is cured from the inner part of the ejected ink composition by irradiation with actinic radiation immediately after landing.

In particular, the outermost surface of the ejected ink composition is subjected to polymerization inhibition due to oxygen by the presence of Component A-1 which is presumed to have a high dissolved oxygen content, and the initial reaction rate is lowered. Consequently, the outermost surface of the ink composition is kept in a liquid state for a long period of time and the outermost surface of the ink composition spreads while wet, and thus, coalescence between the ink compositions is promoted. It is presumed that, as a result, the ink composition forms a smoother level surface, whereby an image having a high degree of glossiness and no marked stripe unevenness can be obtained.

Particularly, when printing in a multipass mode in which the same area is printed by overstriking, there occurs a case in which an ejected ink composition is overlayered on a previously ejected ink composition during overstriking. In this process, it is thought that if the outermost surface of the previously ejected ink composition is in a liquid state, the subsequently ejected ink composition spreads while wet, and thus, a higher degree of gloss is obtained.

When controlling the cured state of an ejected ink composition, it is important to maintain only the very outermost surface of the ejected ink composition in a liquid state. If the interior of the ejected ink composition is kept in a liquid state for a long period of time, a final printed material might become tacky, or a subsequently landing ink composition might enter the interior of the previously ejected ink composition when overstriking, thus forming a crater-like recess in a printed material. As a result, the smoothness of a printed material surface might be undesirably lost. Further, it is thought that low curability of the interior of the landed ink composition might cause interference between ejected ink compositions (the position of ejected ink compositions being displaced due to overlapping of the ejected ink compositions), thus accentuating stripe unevenness. It is presumed that in the present invention, a combined use of Component A-1 makes it possible to maintain high curability of the inner part of the ejected ink composition for a long period of time.

It is presumed that according to the present invention, since a combined use of Component A-1 makes it possible to selectively maintain only the outermost surface of the cured film in a liquid state for a long period of time while strongly promoting the curability of the inner part of the ejected ink composition, an image having high glossiness and no marked stripe unevenness can be obtained.

In the inkjet image quality, it is furthermore important that decoloration of the printed image due to nozzle clogging should not occur. In particular, it is difficult to secure continuous discharge stability when discharging continuously for a long period of time. In the present invention, an ink composition containing Component A-1, and having a surface tension of 34.0 to 39.0 mN/m is printed using an inkjet head having a nozzle plate that has been subjected to an ink-philic treatment, and it has become clear that with the ink composition, a printed material having excellent continuous discharge stability for a long period of time, and thus not causing decoloration of the image can be obtained stably.

That is, according to the present invention, a high-quality printed material having high glossiness and no marked stripe unevenness, and being free from decoloration due to nozzle clogging can be obtained stably.

Hereinafter, each of the components, physical properties, or the like of the ink composition of the present invention will be described.

### <Surface Tension of Ink Composition>

The surface tension at 25°C of the ink composition of the present invention is 34.0 to 39.0 mN/m, preferably 35.0 to 38.5 mN/m, and more preferably 35.5 to 38.0 mN/m. If the surface tension at 25°C is more than 39.0 mN/m, an image having excellent glossiness cannot be obtained in some cases. Further, if the surface tension at 25°C is less than 34.0 mN/m, decoloration due to nozzle clogging occurs in some cases. If the surface tension at 25°C is 34.0 to 39.0 mN/m, a printed material having excellent glossiness and being free from decoloration can be obtained. Further, good continuous discharge stability can be obtained.

Examples of the method for measuring the surface tension of the ink composition include a method for measuring the temperature of a liquid at 25°C by a Wilhelmy method using a generally used surface tensiometer (for example, Surface Tensiometer CBVP-Z manufactured by Kyowa Interface Science Co., Ltd., and the like).

In order to adjust the surface tension at 25°C of the ink composition of the present invention to a range from 34.0 to 39.0 mN/m, it is preferable that the ink composition of the present invention do not contain a silicone-based surfactant and a fluorine-based surfactant, or the total content of the silicone-based surfactant and the fluorine-based surfactant be less than 0.01% by mass based on the total mass of the ink composition, that the ink composition of the present invention do not contain a silicone-based surfactant and a fluorine-based surfactant, or the total content thereof be not greater than 0.005% by mass, and it is particularly preferable that the ink composition of the present invention do not contain a silicone-based surfactant and a fluorine-based surfactant. Within the above-described range, an image having excellent glossiness can be obtained. Particularly, it is presumed that when performing multi-pass painting, the ejected ink composition (dots) is overlayered on the previously painted ink composition (dots), and promoted to be wet and spread.

### Compound Represented by Formula (1) (Component A-1)

The ink composition of the present invention contains a compound represented by the formula (1) (Component A-1). 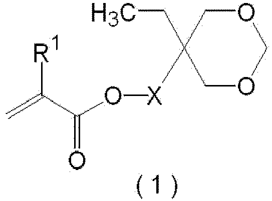 (in the formula (1), R¹ represents a hydrogen atom or a methyl group, and X represents a single bond or a divalent linking group.)

The compound represented by the formula (1) may be an acrylate compound or a methacrylate compound, but it is preferably an acrylate compound, that is, R¹ is preferably a hydrogen atom.

The divalent linking group in X of the formula (1) is not particularly limited as long as it does not significantly interfere with the effect of the present invention, but it is preferably a divalent hydrocarbon group, or a divalent group having a combination of a hydrocarbon group and an ether bond, and more preferably a divalent hydrocarbon group, a poly(alkyleneoxy) group or a poly(alkyleneoxy)alkyl group. Further, the number of carbon atoms of the divalent linking group is preferably 1 to 60, and more preferably 1 to 20.

X in the formula (1) is preferably a single bond, a divalent hydrocarbon group, or a divalent group having a combination of a hydrocarbon group and an ether bond, more preferably a divalent hydrocarbon group having 1 to 20 carbon atoms, still more preferably a divalent hydrocarbon group having 1 to 8 carbon atoms, and particularly preferably a methylene group.

Specific examples of the compound represented by the formula (1) preferably contain the compounds (A-1) to (A-1-4) shown below, but are not limited thereto.

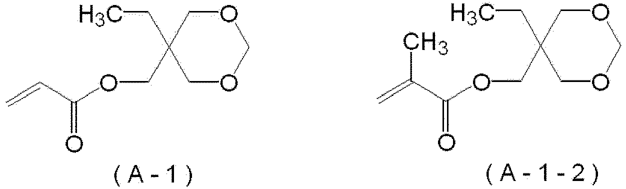

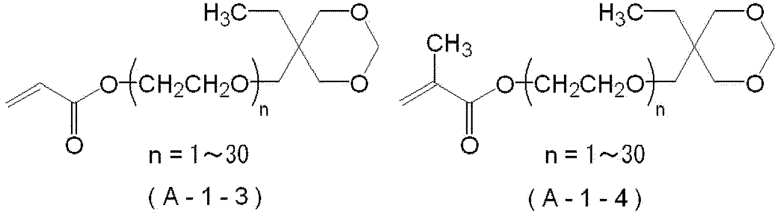

Among these, a cyclic trimethylolpropane formal acrylate (A-1) and a cyclic trimethylolpropane formal methacrylate (A-1-2) are preferred, and a cyclic trimethylolpropane formal acrylate (A-1) is particularly preferred

The content of the compound represented by the formula (1) in the ink composition of the present invention is preferably 5 to 70% by mass, more preferably 10 to 60% by mass, still more preferably 15 to 55% by mass, and particularly preferably 20 to 50% by mass, based on the total mass of the ink composition. Within the above-described range, a curing profile in which only the surface is selectively maintained in a liquid state for a long period of time is promoted while the curability of the inner part of the ink composition is strongly promoted, a printed material having high glossiness and little stripe unevenness can be obtained.

### Polymerization Initiator (Component B)

The ink composition of the present invention contains a polymerization initiator (Component B).

A polymerization initiator is a compound that absorbs external energy such as the above-described actinic radiation and the like to form a polymerization-initiating species. The polymerization initiators may be used singly or in combination of two or more kinds thereof.

Preferred examples of the polymerization initiator that can be used in the present invention include a photoradical polymerization initiator, and specific examples thereof include an acylphosphine compound, aromatic ketones (IRGACURE 184 and the like), an aromatic onium salt compound, an organic peroxide, a thio compound, a hexaarylbiimidazole compound, a ketoxime ester compound, a borate compound, an azinium compound, a metallocene compound, an active ester compound, a compound having a carbon-halogen bond, and the like.

Specific examples of the polymerization initiator are known to a person skilled in the art, and are described in, for example, paragraph Nos. 0090 to 0116 of JP2009-185186A.

As the polymerization initiator, at least one kind of an acylphosphine oxide compound, a thioxanthone compound, a thiochromanone compound, and an α-aminoalkyl ketone is preferably contained.

The ink composition of the present invention preferably contains an α-aminoalkyl ketone compound (Component B-1), an acylphosphine compound (Component B-2), and a thioxanthone compound and/or a thiochromanone compound (Component B-3), and more preferably a combination of plural kinds of Component B-1 to Component B-3.

Hereinbelow, Component B-1 to Component B-3 will be described.

### α-Aminoalkyl Ketone Compound (Component B-1)

The ink composition of the present invention preferably contains an α-aminoalkyl ketone compound (Component B-1). Component B-1 is preferably an α-aminoalkylphenone compound represented by the formula (b-1-1).

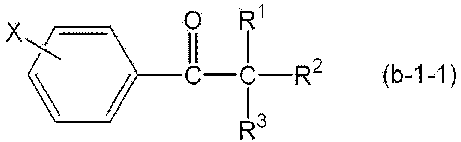

In the formula (b-1-1), R¹, R², and R³ each independently represent a hydroxy group, an alkyl group having 1 to 10 carbon atoms which may have a substituent, an alkoxy group having 1 to 10 carbon atoms which may have a substituent, or an amino group having 1 to 10 carbon atoms which may have a substituent, among which at least one represents an amino group. X represents a hydrogen atom, an amino group which may have a substituent, an alkylthio group which may have a substituent, or an alkyl group which may have a substituent. Further, in the case where at least one of R¹, R², R³, and X is an amino group, they may be bonded to each other to form a heterocyclic group.

As Component B-1, a compound represented by any one of the formula (b-1-2) and the formula (b-1-3) is preferred.

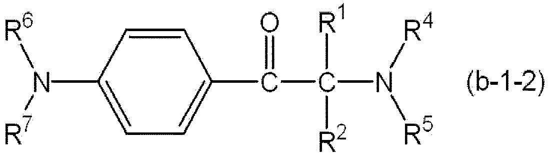

In the formula (b-1-2), R⁴, R⁵, R⁶, and R⁷ represent alkyl groups, each of which may have a substituent, and in at least one pair of R⁴ and R⁵, and R⁶ and R⁷ there may be bonding between each of the members of the pair to form a heterocyclic group. R¹, R², and the substituent have the same meanings as in the formula (b-1-1), respectively.

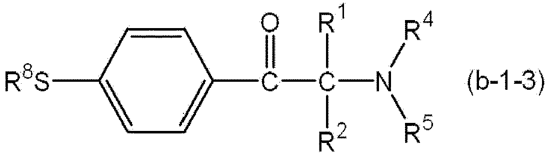

In the formula (b-1-3), R⁸ represents an alkyl group having 1 to 10 carbon atoms which may have a substituent.

R¹ and R² have the same meanings as R¹ and R² in the formula (b-1-1), and R⁴ and R⁵ have the same meanings as R⁴ and R⁵ in the formula (b-1-2).

In the case where R⁴ and R⁵ are bonded to each other to form a heterocyclic group, although they are not particularly limited and can be suitably selected, they are preferably, for example, morpholine groups.

As the example of a commercial product of the α-aminoalkylphenone compound, IRGACURE 369 (manufactured by Ciba Specialty Chemicals, K. K.), IRGACURE 907 (manufactured by Ciba Specialty Chemicals, K. K.), and the like are suitable.

The content of the α-aminoalkyl ketone compound (Component B-1) is preferably 0.1 to 15% by mass, more preferably 0.5 to 10% by mass, and still more preferably 1 to 5% by mass, in the ink composition.

### Acylphosphine Compound (Component B-2)

The ink composition of the present invention preferably contains an acylphosphine compound (Component B-2).

As the acylphosphine compound (Component B-2), the acylphosphine oxide compounds described in paragraph Nos. 0080 to 0098 of JP2009-096985A are preferred, and among them, a compound having a structure of a monoacylphosphine oxide represented by the formula (b-2-1), or a compound having a bisacylphosphine oxide structure represented by the formula (b-2-2) is preferred, and as the polymerization initiator of the present invention, a bisacylphosphine oxide compound is more preferred.

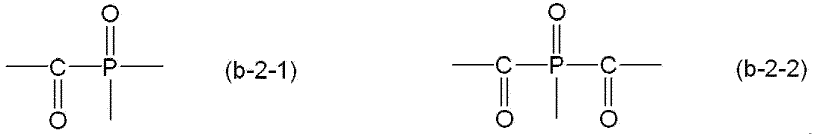

In particular, as the acylphosphine oxide compound, one having a structure of the formula (b-2-3) or the formula (b-2-4) is preferred, and a bisacylphosphine oxide of the formula (b-2-4) is more preferred. 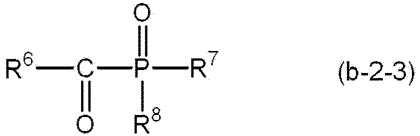 (in the formula (b-2-3), R⁶, R⁷, and R⁸ each represent an aromatic hydrocarbon group which may have a methyl group or an ethyl group as a substituent.)

As the monoacylphosphine oxide compound represented by the formula (b-2-3), a phenyl group in which R⁶ to R⁸ may have a methyl group as a substituent is preferred, and a phenyl group in which R⁷ and R⁸ are each a phenyl group and a phenyl group in which R⁶ has 1 to 3 methyl groups are more preferred.

Among them, as the monoacylphosphine oxide compound represented by the formula (b-2-3) and 2,4,6-trimethylbenzoyl diphenyl phosphine oxide (DAROCUR TPO: manufactured by Ciba Specialty Chemicals, K. K., and LUCIRIN TPO: manufactured by BASF) are preferred. 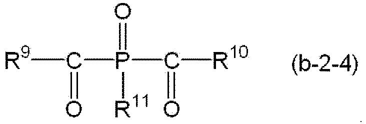 (in the formula (b-2-4), R⁹, R¹⁰, and R¹¹ each represent an aromatic hydrocarbon group which may have a methyl group or an ethyl group as a substituent.)

As the bisacylphosphine oxide compound represented by the formula (b-2-4), a phenyl group in which R⁹ to R¹¹ may have a methyl group as a substituent is preferred, a phenyl group in which R¹¹ is a phenyl group and a phenyl group in which R⁹ and R¹⁰ have 1 to 3 methyl groups are more preferred.

Among them, as the bisacylphosphine oxide compound represented by the formula (b-2-4), bis(2,4,6-trimethylbenzoyl)phenyl phosphine oxide (IRGACURE 819, manufactured by Ciba Specialty Chemicals, K. K.) is more preferred.

The content of the acylphosphine compound (Component B-2) in the ink composition is preferably 0.1 to 15% by mass, and more preferably 0.5 to 10% by mass, and still more preferably 1 to 5% by mass.

### Thioxanthone Compound and/or Thiochromanone Compound (Component B-3)

The ink composition of the present invention preferably contains a thioxanthone compound and/or a thiochromanone compound (Component B-3).

### <Thioxanthone Compound>

As the thioxanthone compound, a compound represented by the formula (b-3-1) is preferred. 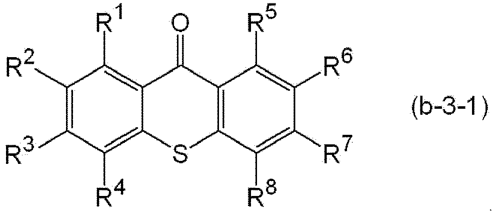 (in the formula (b-3-1), R¹ to R⁸ each independently represent a hydrogen atom, an alkyl group, a halogen atom, a hydroxy group, a cyano group, a nitro group, an amino group, an alkylthio group, an alkylamino group (including the cases of a monoalkyl-substituted amino group and a dialkyl-substituted amino group), an alkoxy group, an alkoxycarbonyl group, an acyloxy group, an acyl group, a carboxy group, or a sulfo group.)

The number of carbon atoms of an alkyl moiety in the alkyl group, the alkylthio group, the alkylamino group, the alkoxy group, the alkoxycarbonyl group, the acyloxy group, and the acyl group is preferably 1 to 20, more preferably 1 to 8, and still more preferably 1 to 4.

Two of R¹ to R⁸ that are adjacent to each other may be combined with each other to form a ring. In the case where they form a ring, examples of the ring structure include a 5- or 6-membered aliphatic or aromatic ring, and the like, it may be a heterocycle containing an element other than a carbon atom, and rings thus formed may be further combined to form a bicyclic ring, for example, a fused ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of the heteroatom when the resulting ring structure is a heterocycle include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfonylthioxanthone, 3,4-di[2-(2-methoxyethoxy)ethoxycarbonyl]thioxanthone, 1-ethoxycarbonyl-3-(1-methyl-1-morpholineethyl)thioxanthone, 2-methyl-6-dimethoxymethylthioxanthone, 2-methyl-6-(1,1-dimethoxybenzyl)thioxanthone, 2-morpholinemethylthioxanthone, 2-methyl-6-morpholinemethylthioxanthone, n-arylthioxanthone 3,4-dicarboximide, n-octylthioxanthone 3,4-dicarboxyimide, N-(1,1,3,3-tetramethylbutyl)thioxanthone 3,4-dicarboxyimide, 1-phenoxythioxanthone, 6-ethoxycarbonyl-2-methoxythioxanthone, 6-ethoxycarbonyl-2-methylthioxanthone, thioxanthone 2-polyethylene glycol ester, and 2-hydroxy-3-(3,4-dimethyl-9-oxo-9H-thioxanthon-2-yloxy)-N,N,N-trimethyl-1-propanaminiu m chloride.

Among them, from the viewpoint of ready availability and curability, 2,4-diethylthioxanthone, 2-isopropylthioxanthone, and 4-isopropylthioxanthone are more preferable, and examples thereof include for example, SPEEDCURE ITX (manufactured by LAMBSON).

### <Thiochromanone Compound>

As the thiochromanone compound, a compound represented by the formula (b-3-2) is preferred.

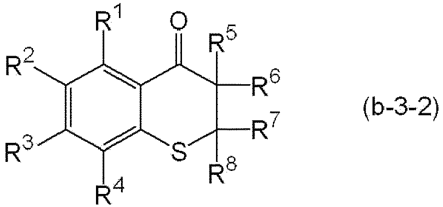

In the formula (b-3-2), R¹, R², R³, R⁴, R⁵, R⁶, R⁷, and R⁸ each independently represent a hydrogen atom, an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group. The number of carbon atoms of an alkyl moiety of the alkyl group, the alkylthio group, the alkylamino group, the alkoxy group, the alkoxycarbonyl group, the acyloxy group, and the acyl group is preferably 1 to 20, more preferably 1 to 8, and still more preferably 1 to 4.

Two of R¹, R², R³, and R⁴ that are adjacent to each other may be bonded to each other, for example, fused, to form a ring.

Examples of the ring structure in the case where they form a ring include a 5- or 6-membered aliphatic ring or aromatic ring, and the like, it may be a heterocycle containing an element other than a carbon atom, and rings thus formed may be further combined with each other to form a bicyclic ring, for example, a fused ring. These ring structures may further have a substituent. Examples of the substituent include those described for the formula (b-3-1). Examples of a heteroatom in the case where the resulting ring structure is a heterocycle include N, O, and S.

Furthermore, the thiochromanone compound is preferably a compound having at least one substituent (an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, a sulfo group, and the like) on the thiochromanone ring structure. As the substituent, an alkyl group, a halogen atom, a hydroxy group, an alkylthio group, an alkylamino group, and an acyloxy group are preferred, an alkyl group having 1 to 20 carbon atoms, and a halogen atom are more preferred, and an alkyl group having 1 to 4 carbon atoms and a halogen atom are still more preferable.

In addition, the thiochromanone compound is more preferably a compound having at least one substituent on each of an aromatic ring and a heterocycle.

Specific examples of the thiochromanone compound preferably include (I-1) to (I-31) below. Among them, (I-14), (I-17), and (I-19) are more preferred, and (I-14) is particularly preferred.

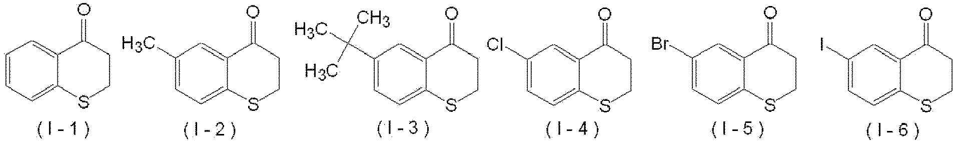

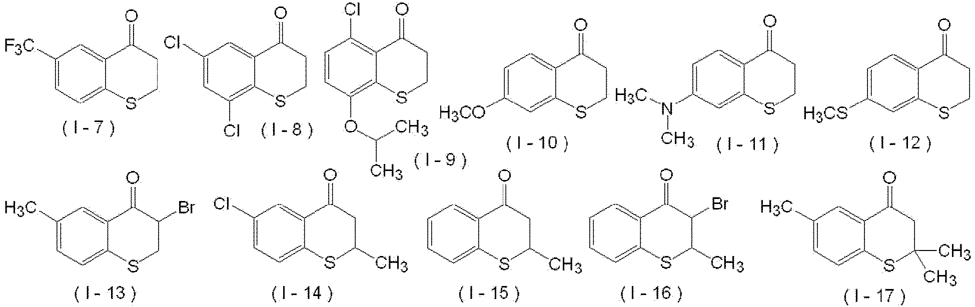

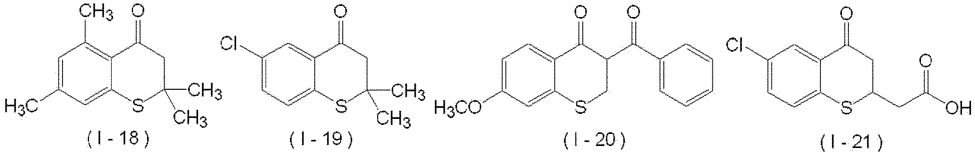

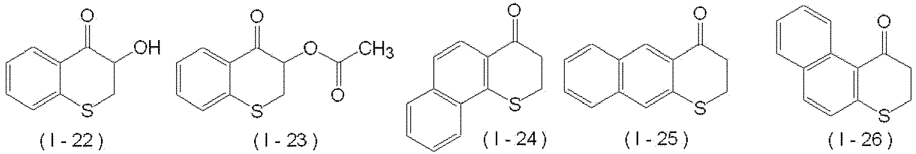

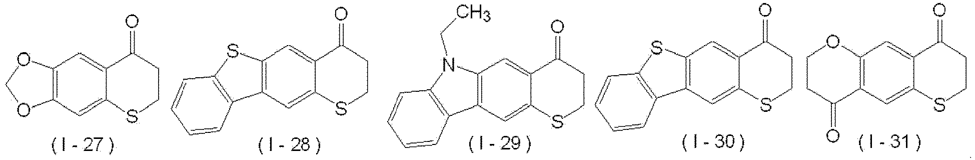

The content of each of the thioxanthone compound and thiochromanone compound (Component B-3) in the ink composition of the present invention will be described below.

The content of the thioxanthone compound in the ink composition of the present invention is preferably 0.05 to 8% by mass, more preferably 0.5 to 6% by mass, and still more preferably 1 to 4% by mass.

The content of the thiochromanone compound in the ink composition of the present invention is preferably 0.05 to 10% by mass, more preferably 0.5 to 10% by mass, and still more preferably 1 to 8% by mass.

The polymerization initiator (Component B) in the present invention is a compound that absorbs external energy such as the above-described actinic radiation and the like to form a polymerization-initiating species, as well as a compound that absorbs a specific active energy ray to promote decomposition of the polymerization initiator (so-called sensitizer).

Since the ink composition that can be used in the present invention absorbs a specific active energy ray to promote decomposition of the polymerization initiator, it preferably contains a sensitizer.

Examples of the sensitizer include polynuclear aromatic compounds (for example, pyrene, perylene, triphenylene, 2-ethyl-9,10-dimethoxyanthracene, and the like), xanthenes (for example, fluorescein, eosin, erythrosine, rhodamine B, rose bengal, and the like), cyanines (for example, thiacarbocyanine, oxacarbocyanine, and the like), merocyanines (for example, merocyanine, carbomerocyanine, and the like), thiazines (for example, thionine, methylene blue, toluidine blue, and the like), acridines (for example, acridine orange, chloroflavin, acriflavine, and the like), anthraquinones (for example, anthraquinone and the like), squaryliums (for example, squarylium, and the like), and coumarins (for example, 7-diethylamino-4-methylcoumarin and the like).

Furthermore, the sensitizer may be used singly or in combination of two or more kinds thereof.

The total amount of the polymerization initiator of the ink composition of the present invention is preferably 0.01 to 40% by mass, more preferably 0.1 to 30% by mass, and still more preferably 1.0 to 25% by mass, based on the total content of the polymerizable compound, from the viewpoints of curability and uniformity in the curing degree in the cured film.

Further, Component B-1 to Component B-3 preferably satisfy the relationship of {(total mass of Component B-1 to Component B-2)≥(total mass of Component B-3)}. By satisfying the relationship, an ink composition having excellent curability can be obtained.

In the present invention, from the viewpoint of curability, {(total mass of Component B-1 to Component B-2)≥(total mass of Component B-3)} is preferably 20:1 to 1:1, more preferably 20:1 to 1.5:1, and still more preferably 15:1 to 1.5:1.

### N-Vinyllactam (Component A-2)

The ink composition of the present invention preferably contains an N-vinyllactam (Component A-2).

As Component A-2, a compound represented by the formula (A-2) is preferred.

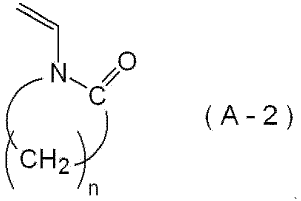

In the formula (A-2), n represents an integer of 2 to 6, and from the viewpoint of flexibility after the ink composition is cured, adhesion to a recording medium, and ease of availability of a raw material, n is preferably an integer of 3 to 5, still more preferably 3 or 5, and particularly preferably 5, that is, N-vinylcaprolactam is particularly preferable. N-vinylcaprolactam is preferable since it has excellent safety, is commonly used and easily available at a relatively low price, and gives particularly good ink curability and adhesion of a cured film to a recording medium.

A hydrogen atom of a methylene group on a heterocycle of Component A-2 may be substituted with other substituents.

Component A-2 may be used singly or in combination of two or more kinds thereof.

The content of Component A-2 is preferably not less than 1% by mass and not greater than 35% by mass, more preferably not less than 8% by mass and not greater than 30% by mass, and still more preferably not less than 12% by mass and not greater than 25% by mass, based on the total mass of the ink composition. Within the above-described range, a curing profile in which only the outermost surface of the cured film is selectively maintained in a liquid state for a long period of time is promoted while the curability of the inner part of the printed material is strongly promoted, and a printed material having high glossiness and no marked stripe unevenness can be obtained.

### Di(meth)acrylate of Hydrocarbon Diol Having 5 to 10 Carbon Atoms (Component A-3)

The ink composition of the present invention may contain a di(meth)acrylate of a hydrocarbon diol having 5 to 10 carbon atoms (Component A-3). The hydrocarbon diol having 5 to 10 carbon atoms in Component A-3 may be any one of a linear hydrocarbon diol, a hydrocarbon diol having a branched structure, and a hydrocarbon diol having a ring structure, but a linear hydrocarbon diol or a hydrocarbon diol having a branched structure is preferred, and a hydrocarbon diol having a branched structure is more preferred.

Furthermore, the number of carbon atoms of the hydrocarbon diol in Component A-3 is 5 to 10, preferably 5 to 9, more preferably 5 or 6, and still more preferably 6.

Furthermore, Component A-3 is preferably a di(meth)acrylate of a hydrocarbon diol having 5 to 9 carbon atoms, more preferably a di(meth)acrylate of a hydrocarbon diol having 5 or 6 carbon atoms, still more preferably a di(meth)acrylate of a hydrocarbon diol having a branched structure having 5 or 6 carbon atoms, and particularly preferably a di(meth)acrylate of a hydrocarbon diol having a branched structure having 6 carbon atom.

Further, in the present invention, when indicating both or either one of the "acrylate" and the "methacrylate", or both or any one of the "(meth)acrylate", the "acryl", and the "methacryl", it/they may be referred to as the "(meth)acryl" in some cases.

Component A-3 may be either one of an acrylate compound and a methacrylate compound, but is preferably an acrylate compound.

Specific examples of Component A-3 preferably include neopentyl glycol di(meth)acrylate, pentanediol di(meth)acrylate, hexanediol di(meth)acrylate, 3-methylpentanediol di(meth)acrylate, heptanediol di(meth)acrylate, octanediol di(meth)acrylate, nonanediol di(meth)acrylate, and decanediol di(meth)acrylate.

Among them, hexanediol di(meth)acrylate, neopentyl glycol di(meth)acrylate, PO-modified neopentylglycol di(meth)acrylate, and 3-methyl-1,5-pentanediol di(meth)acrylate are more preferred, neopentylglycol di(meth)acrylate and 3-methyl-1,5-pentanediol di(meth)acrylate are still more preferred, and PO-modified neopentylglycol di(meth)acrylate and 3-methyl-1,5-pentanediol di(meth)acrylate are particularly preferred.

The content of Component A-3 in the ink composition of the present invention is preferably 3 to 35% by mass, more preferably 5 to 25% by mass, and particularly preferably 7 to 20% by mass, based on the total mass of the ink composition. Within the above-described range, a curing profile in which only the outermost surface of the cured film is selectively maintained in a liquid state for a long period of time is promoted while the curability of the inner part of the printed material is strongly promoted, and a printed material having high glossiness and no marked stripe unevenness can be obtained.

### <Other Polymerizable Compounds>

The ink composition of the present invention may contain polymerizable compounds other than Components A-1 to A-3.

As the other polymerizable compound, an ethylenically unsaturated compound is preferred.

As the other polymerizable compound, a known polymerizable compound may be used, and examples thereof include a (meth)acrylate compound other than Components A-1 to A-3, a vinyl ether compound, an allyl compound, an N-vinyl compound, an unsaturated carboxylic acid, and the like. Examples thereof include radically polymerizable monomers described in JP2009-221414A, polymerizable compounds described in JP2009-209289A, and ethylenically unsaturated compounds described in JP2009-191183A.

The other polymerizable compound is preferably a (meth)acrylate compound, and more preferably an acrylate compound.

Specific examples of the other polymerizable compound preferably include phenoxyethyl (meth)acrylate, isobornyl acrylate, and the like.

Furthermore, the ink composition of the present invention preferably contains a polyfunctional polymerizable compound, and more preferably contains a polyfunctional (meth)acrylate compound as the other polymerizable compound.

As the other polymerizable compound, a monofunctional (meth)acrylate compound having an aromatic group is preferably contained. The cyclic structure of the aromatic group in the monofunctional (meth)acrylate compound having an aromatic group may contain a hetero atom such as O, N, S, and the like.

Examples of the aromatic ring structure which may be contained in the monofunctional (meth)acrylate compound having an aromatic group preferably include a ring structure selected from the group consisting of benzene, naphthalene, anthracene, indene, fluorene, 1H-phenalene, phenanthrene, triphenylene, pyrene, naphthacene, tetraphene, biphenyl, as-indacene, s-indacene, acenaphthylene, fluoranthene, acephenanthrylene, aceanthrylene, chrysene, pleiadene, furan, thiophene, pyrroline, pyrazoline, imidazoline, isooxazoline, isothiazoline, pyridine, pyridazine, pyrimidine, pyrazine, triazole and tetrazole.

Among them, examples of the monofunctional (meth)acrylate compound having an aromatic group particularly preferably include phenoxyethyl (meth)acrylate.

Examples of the other polymerizable compound include unsaturated carboxylic acids such as acrylic acid, methacrylic acid, itaconic acid, crotonic acid, isocrotonic acid, maleic acid, and the like and salts thereof, anhydrides having ethylenically unsaturated groups, and radically polymerizable compounds such as acrylonitrile, styrene, various additional unsaturated polyesters, unsaturated polyethers, unsaturated polyamides, unsaturated urethane, and the like.

Specific examples of the other polymerizable compound include (meth)acrylic acid derivatives such as isobornyl (meth)acrylate, 2-ethylhexyl (meth)acrylate, 2-hydroxyethyl (meth)acrylate, butoxyethyl (meth)acrylate, carbitol (meth)acrylate, cyclohexyl (meth)acrylate, tetrahydrofurfuryl (meth)acrylate, benzyl (meth)acrylate, methyl (meth)acrylate, n-butyl (meth)acrylate, allyl (meth)acrylate, glycidyl (meth)acrylate, dimethylamino methyl (meth)acrylate, bis(4-(meth)acryloxypolyethoxyphenyl)propane, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol diacrylate, pentaerythritol tri(meth)acrylate, pentaerythritol tetra(meth)acrylate, dipentaerythritol tetra(meth)acrylate, trimethylol ethane tri(meth)acrylate, trimethylolpropane tri(meth)acrylate, oligoester (meth)acrylate, 2,2-bis(4-(meth)acryloxypolyethoxyphenyl)propane, N-methylol (meth)acrylamide, diacetone (meth)acrylamide, epoxy (meth)acrylate, and the like, and allyl compound derivatives such as allyl glycidyl ether, diallyl phthalate, triallyl trimellitate, and the like.

More specifically, radically polymerizable or crosslinkable monomers, oligomers, and polymers that are commercial products or are industrially known, such as those described in "Crosslinking Agent Handbook", edited by Shinzo Yamashita (1981, Taiseisha); "UV/EB Curing Handbook (Starting Materials Ed.)" edited by Kiyoshi Kato (1985, Kobunshi Kankoukai); "Application and Market of UV/EB Curing Technology" edited by Rad Tech, p. 79 (1989, CMC); and "Polyester Resin Handbook" edited by Eiichiro Takiyama (1988, The Nikkan Kogyo Shimbun Ltd.), and the like may be used.

The molecular weight of the other polymerizable compound is preferably 80 to 2,000, more preferably 80 to 1,000, and still more preferably 80 to 800.

As the other polymerizable compound, a monofunctional vinyl ether compound can be used.

Examples of the monofunctional vinyl ether compound that is suitably used include ethylene glycol monovinyl ether, triethylene glycol monovinyl ether, hydroxyethyl monovinyl ether, ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexanedimethanol monovinyl ether, n-propyl vinyl ether, isopropyl vinyl ether, dodecyl vinyl ether, diethylene glycol monovinyl ether, and the like.

In the case where the ink composition of the present invention contains the other polymerizable compound, the content of the other polymerizable compound in the ink composition of the present invention is preferably 1 to 70% by mass, more preferably 3 to 55% by mass, and particularly preferably 5 to 25% by mass, based on the total mass of the ink composition.

The ink composition of the present invention preferably contains a polyfunctional vinyl ether compound as the other polymerizable compound. Further, the "polyfunctional" means bifunctional or higher. A bifunctional to tetrafunctional vinyl ether compound is preferred, and a bifunctional vinyl ether compound is more preferred.

The di- or trivinyl ether compound as the polyfunctional vinyl ether compound will be exemplified.

Examples of the vinyl ether compound that is suitably used include di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexane diol divinyl ether, cyclohexanedimethanol divinyl ether, trimethylolpropane trivinyl ether, and the like.

In particular, a difunctional vinyl ether compound having an ethylene glycol chain is preferred, and in this case, the flexibility of the cured film and the glossiness of the image are excellent. Examples of the difunctional vinyl ether compound having an ethylene glycol chain preferably include diethylene glycol divinyl ether, triethylene glycol divinyl ether, and tetraethylene glycol divinyl ether, and more preferably triethylene glycol divinyl ether.

The content of the polyfunctional vinyl ether compound in the ink composition of the present invention is preferably 1 to 15% by mass, more preferably 1.5 to 10% by mass, still more preferably 2 to 8% by mass, and particularly preferably 2.5 to 5% by mass, based on the total mass of the ink composition. Within the above-described range, an ink composition having excellent curability and glossiness of an image can be obtained.

The ink composition of the present invention can contain a monofunctional (meth)acrylate compound having a chained hydrocarbon group having 8 to 13 carbon atoms. The chained hydrocarbon group in the compound may be either a linear hydrocarbon group or a branched hydrocarbon group, but is preferably a branched hydrocarbon group.

The monofunctional (meth)acrylate compound is preferably a (meth)acrylic ester of a chained hydrocarbon monoalcohol having 8 to 13 carbon atoms, and more preferably a (meth)acrylic ester of a chained hydrocarbon monoalcohol having 10 to 13 carbon atoms.

The monofunctional (meth)acrylate compound may be either an acrylate compound or a methacrylate compound, but is preferably an acrylate compound.

Specific examples of the monofunctional (meth)acrylate compound include octyl (meth)acrylate, isooctyl (meth)acrylate, nonyl (meth)acrylate, decyl (meth)acrylate, isodecyl (meth)acrylate, lauryl (meth)acrylate, and tridecyl (meth)acrylate, and the like. Among them, isooctyl (meth)acrylate, decyl (meth)acrylate, isodecyl (meth)acrylate, lauryl (meth)acrylate, and tridecyl (meth)acrylate are preferred, isooctyl (meth)acrylate, isodecyl (meth)acrylate, and tridecyl (meth)acrylate are more preferred, and isodecyl (meth)acrylate is particularly preferred.

The content of the monofunctional (meth)acrylate compound in the ink composition of the present invention is preferably 1 to 25% by mass, more preferably 2 to 20% by mass, and still more preferably 3 to 15% by mass, based on the total mass of the ink composition.

### <Surfactant>

A surfactant may be added to the ink composition of the present invention so as to impart a stable discharging property over a long period of time.

However, from the viewpoints of glossiness and inhibition of stripe unevenness, it is preferable that the ink composition of the present invention contain neither a silicone-based surfactant nor a fluorine-based surfactant or the total content of the silicone-based surfactant and fluorine-based surfactant be less than 0.01% by mass, based on the total mass of the ink composition; it is more preferable that the ink composition of the present invention contain neither a silicone-based surfactant nor a fluorine-based surfactant or the total content of the silicone-based surfactant and the fluorine-based surfactant be not greater than 0.005% by mass; and it is particularly preferable that the ink composition of the present invention contain neither a silicone-based surfactant nor a fluorine-based surfactant, as described above.

Examples of the surfactant other than the silicone-based surfactant and the fluorine-based surfactant, include those described in JP62-173463A and JP62-183457A. Examples thereof include anionic surfactants such as a dialkyl sulfosuccinate salt, an alkylnaphthalene sulfonic acid salt, a fatty acid salt, and the like, nonionic surfactants such as a polyoxyethylene alkyl ether, a polyoxyethylene alkyl allyl ether, an acetylene glycol, or a polyoxyethylene-polyoxypropylene block copolymer, and cationic surfactants such as an alkylamine salt, a quaternary ammonium salt, and the like.

Furthermore, it is preferable that the ink composition of the present invention do not contain a surfactant other than a silicone-based surfactant and a fluorine-based surfactant, or the content thereof be less than 0.01% by mass based on the total mass of the ink composition; it is more preferable that the ink composition of the present invention do not contain a surfactant other than a silicone-based surfactant and a fluorine-based surfactant, or the content thereof be less than 0.005% by mass based on the total mass of the ink composition; and it is particularly preferable that the ink composition of the present invention do not contain a surfactant other than a silicone-based surfactant and a fluorine-based surfactant.

### <Oligomer>

The ink composition of the present invention may preferably contain an oligomer.

An oligomer is generally a polymer in which a limited number (usually 5 to 100) of monomers are bonded, and a known compound called an oligomer may be selected freely, but in the present invention, it is preferable to select a polymer having a weight average molecular weight of 400 to 10,000 (more preferably 500 to 5,000).

The oligomer may have a radically polymerizable group. The radically polymerizable group is preferably an ethylenically unsaturated group, and more preferably a (meth)acryloxy group.

The oligomer in the present invention may be any oligomer, but examples thereof include an olefin-based oligomer (an ethylene oligomer, a propylene oligomer, a butene oligomer, and the like), a vinyl-based oligomer (a styrene oligomer, a vinyl alcohol oligomer, a vinylpyrrolidone oligomer, an acrylate oligomer, a methacrylate oligomer, and the like), a diene-based oligomer (a butadiene oligomer, a chloroprene rubber, a pentadiene oligomer, and the like), a ring-opening polymerization type oligomer (di-, tri-, tetra-ethylene glycol, polyethylene glycol, polyethylimine, and the like), an addition-polymerization type oligomer (an oligoester acrylate, a polyamide oligomer, a polyisocyanate oligomer), and an addition-condensation oligomer (a phenolic resin, an amino resin, a xylene resin, a ketone resin, and the like). Among them, an oligoester (meth)acrylate is preferred, and among them, a urethane (meth)acrylate, a polyester (meth)acrylate, and an epoxy (meth)acrylate are preferred, and a urethane (meth)acrylate is more preferred.

As the urethane (meth)acrylate, an aliphatic urethane (meth)acrylate and an aromatic urethane (meth)acrylate may preferably be cited, and an aliphatic urethane (meth)acrylate may more preferably be cited.

Furthermore, the urethane (meth)acrylate is preferably a tetrafunctional or lower urethane (meth)acrylate, and more preferably a bifunctional or lower urethane (meth)acrylate.

By incorporating a urethane (meth)acrylate therein, an ink composition having excellent adhesion to a substrate and excellent curability can be obtained.

With respect to the oligomer, reference may also be made to Oligomer Handbook (edited by Junji Furukawa, The Chemical Daily Co., Ltd.).

Moreover, the commercial product of the oligomer may be exemplified as follows.

Examples of the urethane (meth)acrylate include R1204, R1211, R1213, R1217, R1218, R1301, R1302, R1303, R1304, R1306, R1308, R1901, R1150, and the like manufactured by Dai-Ichi Kogyo Seiyaku Co., Ltd., EBECRYL series (for example, EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, U200AX, and the like manufactured by Shin-Nakamura Chemical Co., Ltd., and Aronix M-1100, M-1200, M-1210, M-1310, M-1600, M-1960, and the like manufactured by Toagosei Co., Ltd.

Examples of the polyester (meth)acrylate include EBECRYL series (for example, EBECRY L770, IRR467, 81, 84, 83, 80, 675, 800, 810, 812, 1657, 1810, IRR302, 450, 670, 830, 870, 1830, 1870, 2870, IRR267, 813, IRR483, 811, and the like) manufactured by Daicel-Cytec Company Ltd. and Aronix M-6100, M-6200, M-6250, M-6500, M-7100, M-8030, M-8060, M-8100, M-8530, M-8560, M-9050, and the like manufactured by Toagosei Co., Ltd.

Examples of the epoxy (meth)acrylate include EBECRYL series (for example, EBECRYL 600, 860, 2958, 3411, 3600, 3605, 3700, 3701, 3703, 3702, 3708, RDX63182, 6040, and the like) manufactured by Daicel-Cytec Company Ltd, and the like.

The oligomer may be used singly or in combination of two or more kinds thereof.

The content of the oligomer in the ink composition of the present invention is preferably 0.1 to 50% by mass, more preferably 0.5 to 20% by mass, and still more preferably 1 to 10% by mass, based on the total mass of the ink composition.

### <Colorant>

The ink composition of the present invention may preferably contain a colorant so as to improve the visibility of a formed image area. The colorant is not particularly limited, but a pigment and an oil-soluble dye that have excellent weather resistance and rich color reproduction are preferred, and it may be selected from any known coloring agent such as a soluble dye and the like. It is preferable to select a compound that does not function as a polymerization inhibitor as the colorant, from the viewpoint that the sensitivity of the curing reaction by actinic radiation should not be lowered.

The pigment that can be used in the present invention is not particularly limited but, for example, organic and inorganic pigments having the numbers described below in the Color Index may be used.

As a red or magenta pigment, Pigment Red 3, 5, 19, 22, 31, 38, 42, 43, 48:1, 48:2,48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36; as a blue or cyan pigment, Pigment Blue 1,15, 15:1, 15:2, 15:3, 15:4, 15:6, 16, 17-1, 22, 27, 28, 29, 36, or 60; as a green pigment, Pigment Green 7, 26, 36, or 50; as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment, Pigment Black 7, 28, or 26; as a white pigment, Pigment White 6, 18, or 21, or the like may be used according to the intended application.

In the present invention, a disperse dye may be used in a range that enables it to be dissolved in a water-immiscible organic solvent. The disperse dyes generally include water-soluble dyes, but in the present invention, it is preferable for the disperse dye to be used in a range such that it dissolves in a water-immiscible organic solvent.

Specific preferred examples of the disperse dye include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; C. I. Disperse Green 6:1 and 9; and the like.

It is preferable that the colorant is added to the ink composition and then dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, a paint shaker, and the like may be used.

The colorant may be added directly to the ink composition, together with each of the components when preparing the ink composition. Further, in order to improve dispersibility, it may be added in advance to a solvent or a dispersing medium such as a polymerizable compound used in the present invention, uniformly dispersed or dissolved therein, and then blended together.

In the present invention, in order to avoid the problem of the solvent resistance being degraded when the solvent remains in the cured image and the VOC (Volatile Organic Compounds) problem of the residual solvent, it is preferable to add the colorant in advance to a dispersing medium such as a polymerizable compound, and blending together. As a polymerizable compound that is used for addition of a colorant, it is preferable in terms of dispersion suitability to select a monomer having the lowest viscosity. The colorants may be favorably used by appropriately selecting one kind or two or more kinds according to the intended purpose of the ink composition.

Furthermore, when a colorant such as a pigment and the like, that is present as a solid in the ink composition, is used, it is preferable for the colorant, the dispersant, the dispersing medium, the dispersion conditions, and the filtration conditions to be set such that the average particle size of colorant particles is preferably 0.005 to 0.5 µm, more preferably 0.01 to 0.45 µm, and still more preferably 0.015 to 0.4 µm. By such control of the particle size, clogging of a head nozzle can be suppressed, and the storage stability of the ink composition, the transparency, and the curing sensitivity can be maintained, which is thus preferable.

The content of the colorant in the ink composition is appropriately selected according to the color and the intended purpose, and is preferably 0.01 to 30% by mass based on the weight of the entire ink composition.

### <Dispersant>

The ink composition of the present invention preferably contains a dispersant. In particular, when the pigment is used, the ink composition preferably contains a dispersant in order to stably disperse the pigment in the ink composition. As the dispersant that can be used in the present invention, a polymeric dispersant is preferable. The "polymeric dispersant" in the present invention means a dispersant having a weight average molecular weight of 1,000 or more.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), DISPERSE AID 6, DISPERSE AID 8, DISPERSE AID 15, and DISPERSE AID 9100 (manufactured by San Nopco Limited); various types of SOLSPERSE dispersants such as SOLSPERSE 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), IONET S-20 (manufactured by Sanyo Chemical Industries, Ltd.), and DISPARLON KS-860, 873 SN, and 874 (polymeric dispersant), #2150 (aliphatic polycarboxylic acid), and #7004 (polyether ester type) (manufactured by Kusumoto Chemicals, Ltd.).

The content of the dispersant in the ink composition of the present invention is appropriately selected according to the intended purpose, and is generally preferably 0.05 to 15% by mass based on the total mass of the ink composition.

### <Other Components>

The ink composition of the present invention may contain, as necessary, in addition to each of the components as described above, a sensitizer, a co-sensitizer, an ultraviolet absorber, an antioxidant, an antifading agent, a conductive salt, a solvent, a polymer compound, a basic compound, or the like. As other components, a known component may be used, and for example, the components described in JP2009-221416A may be used.

Furthermore, from the viewpoint of a storage property and suppression of head clogging, the ink composition of the present invention may preferably contain a polymerization inhibitor.

The content of the polymerization inhibitor is preferably 200 to 20,000 ppm, based on the total mass of the ink composition of the present invention.

Examples of the polymerization inhibitor include a nitroso-based polymerization inhibitor, a hindered amine-based polymerization inhibitor, hydroquinone, benzoquinone, p-methoxyphenol, TEMPO, TEMPOL, cupferron A1, and the like.

### <Physical Properties of Ink>

In the present invention, the ink composition has a viscosity at 25°C of preferably no more than 40 mPa·s, more preferably 5 to 40 mPa·s, and still more preferably 7 to 30 mPa·s, taking into consideration a discharging property. Further, the viscosity of the ink composition at the discharge temperature (preferably 25 to 80°C, and more preferably 25 to 50°C) is preferably 3 to 15 mPa·s, and more preferably 3 to 13 mPa·s. With regard to the ink composition of the present invention, it is preferable that its component ratio be appropriately adjusted such that the viscosity is in the above-mentioned range. By setting the viscosity at room temperature (25°C) to be high, even when a porous recording medium (support) is used, penetration of the ink composition into the recording medium can be avoided and numbers of uncured monomers can be reduced. In addition, ink spreading when the liquid droplets of ink composition have landed can be suppressed, and as a result, the image quality is improved, which is thus preferable.

### II. Inkjet Recording Method

The inkjet recording method of the present invention includes:
an image-forming step, in which an ink composition containing a compound represented by the formula (1) (Component A-1) and a polymerization initiator (Component B), and having a surface tension at 25°C of 34.0 to 39.0 mN/m, is discharged onto a recording medium from an inkjet head in which the ink discharging side surface surface has a nozzle plate that has been subjected to an ink-philic treatment, to form an image; and
a curing step, in which the discharged ink composition is irradiated with actinic radiation.

Furthermore, the printed material of the present invention is recorded according to the inkjet recording method of the present invention.

### <Step (a): Image-Forming Step>

First, a step will be described, in which an ink composition is discharged onto a recording medium from an inkjet head in which the ink discharging side surface has a nozzle plate that has been subjected to an ink-philic treatment.

The recording medium used in the present invention is not particularly limited, and a known recording medium may be used. Examples thereof include paper, paper laminated with a plastic (for example, polyethylene, polypropylene, polystyrene, and the like), a metal plate (for example, aluminum, zinc, copper, and the like), a plastic film (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, and the like), and paper or plastic film laminated or vapor-deposited with the above metal.

In the present invention, as the recording medium, a non-absorbing recording medium is preferred, and among them, a plastic film or paper is more preferred.

Examples of the inkjet recording device that can be used in the present invention include a device including an ink supply system, a temperature sensor, and an actinic radiation source.

The ink supply system is constituted with, for example, a main tank containing the ink composition of the present invention, a supply pipe, an ink composition supply tank located adjacent to an inkjet head, a filter, and a piezo system inkjet head.

The inkjet head used in the inkjet recording method of the present invention is an inkjet head in which the ink discharging side surface has a nozzle plate that has been subjected to an ink-philic treatment.

As an inkjet head having a nozzle plate, a known one may be used and not limited but, for example, the inkjet heads described in the specifications of U.S. Pat. No. 7,011,396 and U.S. Patent Application Laid-Open Publication No. 2009/0290000, and the like may be preferably used.

Examples of the inkjet head in which the ink discharging side surface has a nozzle plate that has been subjected to an ink-philic treatment include an on-demand inkjet head due to a piezo driving system manufactured by FUJIFILM Dimatix, Inc. Specific examples thereof include S-class and Q-class Sapphires.

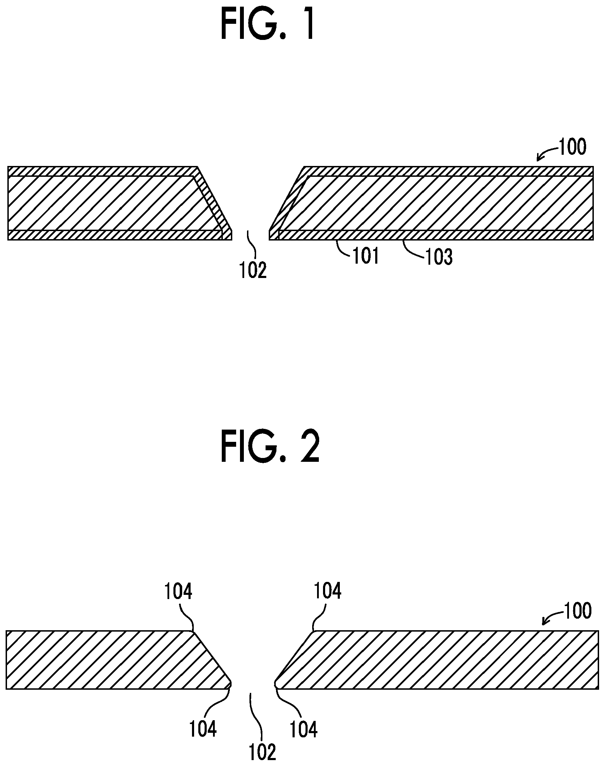

The shape of the nozzle is preferably one in which an outlet 102 does not protrude from the ink discharging side surface of a nozzle plate 100, as shown in Fig. 1, and a nozzle formed by providing a through-hole in a member in the form of a plate is more preferred. Examples of the shape of the opening of the nozzle include a polygonal shape with rounded corners, circular, oval, rectangular, and polygonal shapes, and the like, and among them, a polygonal shape with rounded corners, and circular and polygonal shapes are preferred. In addition, the cross-sectional shape of the through-hole to be a nozzle is preferably a shape tapered toward the ink discharging port, as shown in Fig. 1.

The nozzle plate is a nozzle plate having a ink discharging side surface being subjected to an ink-philic treatment, and preferably a nozzle plate having at least a part of the ink discharging side surface being subjected to an ink-philic treatment, and more preferably a nozzle plate having a whole surface of the ink discharging side surface being subjected to an ink-philic treatment.

Here, the contact angle on the surface of the nozzle plate that has been subjected to an ink-philic treatment is preferably equal to or lower than 90°, more preferably equal to or lower than 85°, and still more preferably equal to or lower than 80°. The above-described numerical range is preferable for the discharge stability.

The contact angle on the surface of the nozzle plate is measured in accordance with a method specified in "Wettability Test Method on Glass Surface of Substrate" (JIS R3257), except that the substrate glass is changed to a nozzle plate and pure water is changed to an ink composition in the present invention.

Examples of the method for an ink-philic treatment include a method in which one or more non-ink-repellent layers are formed on at least a part of the surface of the nozzle plate.

Specifically, the nozzle plate preferably includes a layer formed of at least one selected from the group consisting of diamond-like carbon, metal, semi-metal oxide, metal oxide, semi-metal nitride, and metal nitride on at least a part of the ink discharging side surface. Examples of the semi-metal as mentioned herein include silicon, germanium, bismuth, arsenic, antimony, bismuth, and the like, and among them, silicon is preferred. As the metal, gold, iron, titanium, tantalum, platinum, rhodium, nickel, chromium, and the like are preferred, and gold and iron are more preferred. As the semi-metal oxide, silicon oxide is preferred. As the metal oxide, aluminum oxide is preferred. As the semi-metal nitride, silicon nitride is preferred. As the metal nitride, aluminum nitride is preferred.

In the present invention, a layer formed with at least one selected from the group consisting of gold, iron, stainless steel, titanium, tantalum, platinum, rhodium, nickel, chromium, silicon oxide, silicon nitride, and aluminum nitride is preferred; a layer formed with at least one selected from the group consisting of gold, stainless steel, and silicon oxide is more preferred; a layer formed with at least one selected from the group consisting of gold and silicon oxide is still more preferred; and a layer formed with gold is most preferably included.

As the ink-philic treatment method, a known method may be used and is not limited, but examples thereof include (1) a method in which the surface of a nozzle plate made of silicon is thermally oxidized to form a silicon oxide film, (2) a method in which an oxide film of silicon or elements other than silicon is formed by oxidation or by sputtering, (3) a method in which a metal film is formed. For the details on these methods, reference may be made to the specification of U.S. Patent Application Laid-Open Publication No. 2010/0141709. Hereinbelow, the ink-philic treatment methods of (1) to (3) will be described, but do not limit the present invention.

(1) The method in which the surface of a nozzle plate made of silicon is thermally oxidized to form a silicon oxide film will be described.

As shown in Fig. 1, a silicon oxide film 101 is formed by thermal oxidation of the entire nozzle plate 100. The silicon oxide film 101 may be formed on the ink discharging side surface, and is preferably formed in at least a part of the periphery of the outlet 102, the ink discharging side surface 103, and the inner wall of the outlet 102.

As shown in Fig. 2, in the case where the edge 104 of the nozzle is rounded, the silicon oxide film 101 may be removed by, for example, hydrofluoric acid. By making the edge of the nozzle rounded, the discharge is stabilized, which is thus preferable. In this case, by removing the silicon oxide film, and then thermally oxidizing the nozzle plate again, a silicon oxide film is formed again. Further, in order to make the sharp angled edge portion rounded, a nozzle plate made of silicon may be immersed in an etching liquid (for example, an aqueous potassium hydroxide (KOH) solution) for any period of time.

The silicon oxide film 101 is formed by subjecting the surface of the nozzle plate 100 to a heat treatment at a temperature of 800 to 1,200°C.

The thickness of the silicon oxide film 101 is preferably not shorter than 0.5 µm, more preferably not shorter than 1 µm, still more preferably 1 to 10 µm, and particularly preferably 2 to 5 µm.

Next, (2) the method in which an oxide film of silicon or elements other than silicon is formed by oxidation or by sputtering will be described.

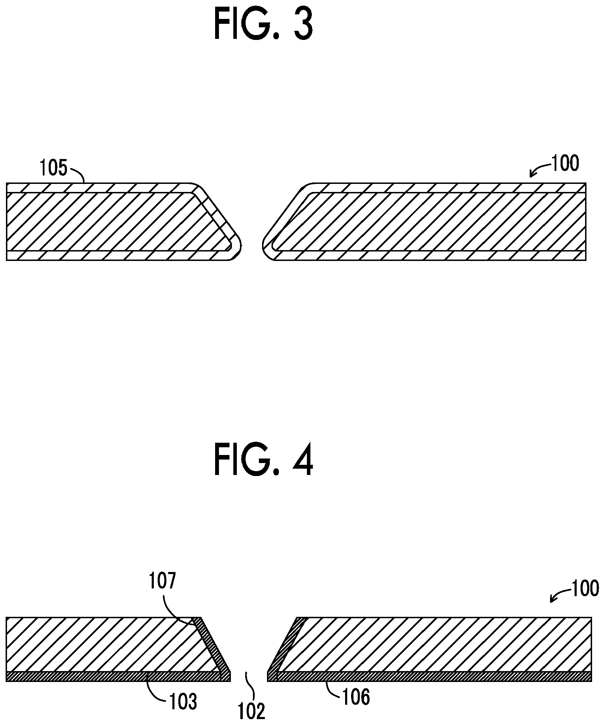

Fig. 3 shows an example in which the silicon oxide film is removed once, and a protective layer 105 is then formed on the surface of the nozzle plate. From the viewpoints of maintenance or prevention of damage during operation of the inkjet recording device, it is preferable that the protective layer 105 have higher durability than the semiconductor layer of silicone or the like.

The protective layer may be an inorganic material or a non-metal material, and examples thereof include oxides, diamond-like carbon, nitrides (silicon nitride and aluminum nitride), and the like.

The protective layer 105 is preferably silicon nitride. In particular, silicon nitride formed at a high temperature which is equal to or higher than 1,000°C is preferable since it has excellent durability and weather resistance, as compared with silicon or silicon oxide. The nitride film formed at a high temperature is preferable since it has a thickness and a small number of pinholes.

The nitride can be formed to be thinner since it has superior durability than the oxide. Specifically, the thickness of the nitride is preferably not longer than 0.5 µm, and more preferably 0.05 to 0.2 µm.

If necessary, the silicon nitride may be formed at a low temperature (for example, 350 to 1,000°C). For example, in the case where the nozzle plate is connected to heat-sensitive parts of the nozzle plate, for example, a piezoelectric actuator having changes in physical properties when heated to equal to or higher than the Curie temperature, it is necessary to form the silicon nitride at a low temperature.

The material that constitutes the protective layer 105 may be selected from the viewpoints of chemical resistance to the discharged liquid. In the case where the protective layer 105 does not react with the discharged liquid, it can be said that it has high chemical resistance. That is, it is preferable that the protective layer 105 be not damaged, corroded, or decomposed. Further, the protective layer 105 may be selected from the durability against the maintenance operation. The pin hole-free protective layer 105 is protected from a liquid obtained from corrosion of a semiconductor, such as an alkaline ink composition and the like.

The thickness of the protective layer 105 is preferably not shorter than 10 nm, and more preferably 10 nm to 20 µm.

The protective layer 105 may have a (non-metallic or metallic) conductive material in order to suppress the generation of a static electric field through the surface of the nozzle plate 100. For example, the conductive material can be grounded. The conductive material is also used for improvement of galvanic compatibility in a print head. Examples of the conductive material include oxides, and preferably tin oxide doped with cesium and lead (ITO).

Next, (3) the method in which a metal film is formed will be described.

The protective layer 105 in (2) above may be in the metal layer. The metal layer is preferable since it has high durability, as compared to semiconductor materials (silicon and the like). Examples of the metal used in the metal layer include titanium, tantalum, platinum, rhodium, gold, nickel, chromium, and a combination thereof. Preferably, the metal layer is formed on the ink discharging side surface.

As shown in Fig. 4, in the case where a metal layer (106, 107) is formed by sputtering or the like, the metal layer 107 inside the nozzle may be formed to be thinner than the metal layer 106 of the surface of the nozzle plate of the ink discharging side surface in some cases. In this case, in order to make the thickness of the metal layer (106, 107) uniform, the metal layer 107 inside the nozzle (for example, those with not shorter than about 200 angstroms), a method in which additional sputtering is performed or a method in which for the metal layer 107 inside the nozzle (for example, those with not shorter than 980 nm), a second metal layer is formed by plating above may be mentioned.

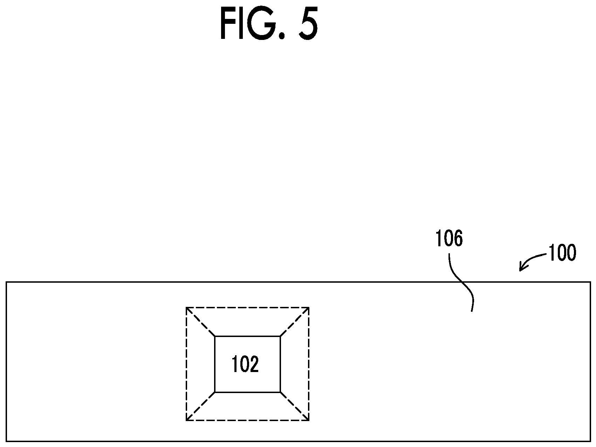

Figs. 4 and 5 show an example in which a metal layer 106 is formed on the outlet 102 or the surface 103 on the ink discharging side of the nozzle plate. The metal oxide layer is naturally formed on the surface of the metal layer in some cases, but the metal oxide layer has a thickness at the level of angstroms and may be considered as a metal layer for accomplishing the purpose of the present invention. Several metals, for example, titanium, are preferable since the metal oxide layer is inactive and has higher resistance to the discharged liquid in some cases.

Preferable examples of the metal having high chemical resistance include titanium, gold, platinum, rhodium, and tantalum. The metal layer of titanium or tantalum has high resistance to an alkaline liquid and prevents corrosion of the outlet of the nozzle plate made of silicon.

The thickness of the metal layer is preferably not shorter than 0.1 µm, more preferably 0.2 to 5 µm, and still more preferably 2 to 2.5 µm. From the viewpoint of durability, the thickness of the metal layer is preferably not shorter than 1 µm, and more preferably 1 to 10 µm. In the case where the metal layer is formed, the nozzle plate can be conductive. In the case where the durability of the metal layer inside the nozzle is enhanced, the metal layer may be subjected to vacuum deposition (for example, sputtering) or vacuum deposition and electroplating.

The non-metallic layer and the metal layer are formed by CVD method such as PVD, PECVD and the like, or by thermal growth of oxides. In addition, in the case where a non-metal layer and a metal layer are formed after removal of the oxide layer, they may be formed with the same thickness as that of the removed oxide layer or with a thickness that is not longer than or more than the thickness of the removed layer. For example, the thickness of the non-metal layer and the metal layer is preferably not shorter than 0.1 µm, and more preferably 0.5 to 20 µm.

In the present invention, the volume of the ink composition discharged by an inkjet head having a nozzle plate that has been subjected to an ink-philic treatment (ejected ink droplet volume) is preferably not smaller than 1 and not larger than 100 pL, more preferably not smaller than 7 and not larger than 100 pL, still more preferably not smaller than 7 and not larger than 50 pL, and particularly preferably not smaller than 7 and not larger than 40 pL. In the case of using the ink composition of the present invention, since the thickness of the ink liquid film on the surface of the nozzle plate is suitably controlled, even an ink composition having a small volume as in the above-described range, the discharge stability is excellent.

In addition, the inkjet head is driven so as to discharge at a resolution of preferably 300x300 to 4,000x4,000 dpi, and more preferably 400x400 to 1,600×1,600 dpi. Further, the dpi as mentioned in the present invention represents the number of dots per 2.54 cm.

The inkjet head preferably has a productivity that is not less than 200 ng·kHz.

The productivity means a mass of the ink composition discharged per second at the mass of the ink composition per dotxnumber of nozzlesxfrequency.

Since the ink composition of the present invention has high curing sensitivity and is capable of curing in a short period of time, an image can be formed without deterioration of the image quality, even using an image forming device having a productivity which is not less than 200 ng·kHz. The productivity is more preferably 200 to 800 ng·kHz, and still more preferably 300 to 600 ng·kHz.

Further, the discharge frequency is preferably 0.5 to 80 kHz, more preferably 1 to 80 kHz, still more preferably 8 to 80 kHz, even still more preferably 15 to 80 kHz, particularly preferably 15 to 60 kHz, and even still more preferably 15 to 50 kHz.

The number of the nozzles formed on one nozzle plate is preferably 10 to 500, more preferably 50 to 400, and still more preferably 100 to 300.

Furthermore, it is preferable to adjust the frequency according to the volume of the ink composition to be discharged.

Specifically, in the case where the volume of the ink composition is more than 7 pL and not larger than 20 pL, the frequency is preferably not less than 25 kHz and less than 80 kHz.

In the case where the volume of the ink composition is more than 20 pL and not larger than 40 pL, the frequency is preferably not less than 15 kHz and less than 40 kHz.

In the case where the volume of the ink composition is more than 40 pL and not larger than 70 pL, the frequency is preferably not less than 10 kHz and less than 25 kHz.

In the case where the volume of the ink composition is more than 70 pL and not larger than 100 pL, the frequency is preferably not less than 8 kHz and less than 15 kHz.

In order to obtain a printed material having a balance between the productivity and the resolution, the size of the ejected droplet is preferably not smaller than 7 pL and not larger than 40 pL.

With the inkjet recording method of the present invention, the discharging is preferably performed in a gray-scale mode in which a plurality of ink compositions having different ejection volumes is discharged in combination. In this case, preferably in 3 stages to 8 stages, more preferably in 3 stages to 7 stages, still more preferably 3 stages to 4 stages, and particularly preferably 3 stages, discharge is performed with different ejection volumes. Within the above-described range, in particular, a smooth image with less feeling of graininess in terms of gradients and pale portions can be obtained, and high productivity can also be maintained.

With the inkjet recording method of the present invention, image formation is preferably carried out by repeating the ink discharge 2 to 16 times in the same area. Specific examples of the method for forming an image regarding the inkjet recording method of the present invention include a multi-pass method in which an inkjet head is scanned while moving in the direction perpendicular to a recording medium transporting direction, a plurality of passes are repeated according to the scan width to form dots and manufacture an image.

With the inkjet recording method of the present invention, image formation is preferably carried out by repeating the ink discharge 4 to 8 times in the same area.

Furthermore, with the inkjet recording method of the present invention, active ray irradiation is preferably carried out at least once between 0.01 seconds to 1 second after the inkjet recording, in the same area. In addition, with the inkjet recording method of the present invention, image formation is carried out by repeating the step in which active ray irradiation is carried out at least once between 0.01 seconds to 1 second after the inkjet recording, in the same area, preferably 2 to 16 times, and more preferably 4 to 8 times.

In the present invention, since it is desirable for the ink composition to be discharged at a constant temperature, a section from the ink composition supply tank to the inkjet head is thermally insulated and heated. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated such that that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The radiation curing type ink composition such as the ink composition of the present invention generally has a viscosity that is higher than that of a normal ink composition or a water-based ink composition used for an inkjet recording ink composition, and variation in viscosity due to a change in temperature at the time of discharge is large. Viscosity variation in the ink composition has a large effect on changes in liquid droplet size (ejection volume) and changes in liquid droplet (ink composition) discharge speed and, consequently, causes the image quality to be degraded. It is therefore necessary to maintain the ink composition discharge temperature to be as constant as possible. In the present invention, the control range for the temperature of ink composition is preferably ±5°C of a set temperature, more preferably ±2°C of the set temperature, and still more preferably ±1°C of the set temperature.

### <Step (b): Curing Step>

Next, the step (b) will be described.

The ink composition discharged onto the support cures by irradiation with actinic radiation. This is due to a polymerization-initiating species such as a radical and the like being generated by decomposition of the polymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation as used herein this process may include α rays, γ rays, electron beams, X-rays, ultraviolet rays, visible light, infrared rays, and the like. Although the peak wavelength of the actinic radiation depends on the absorption characteristics of the sensitizer, it is preferably, for example, 200 to 600 nm, more preferably 300 to 450 nm, and still more preferably 350 to 420 nm.

Furthermore, the polymerization initiation system of the ink composition of the present invention has sufficient sensitivity for low output actinic radiation. Accordingly, it is suitable to perform curing at an illumination intensity on the exposed surface of preferably 100 to 3,000 mW/cm², and preferably 500 to 2,000 mW/cm².

As an actinic radiation source, a mercury lamp, a gas/solid laser, and the like are mainly used, and for an ultraviolet photocuring inkjet ink composition, a mercury lamp and a metal halide lamp are widely known. However, from the viewpoint of protection of the environment, there has recently been a strong desire for mercury not to be used, and replacement by a GaN semiconductor ultraviolet ray-emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when an ultraviolet ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes an LED disclosed in U.S. Pat. No. 6,084,250, which can emit actinic radiation whose wavelength is centered between 300 nm and 370 nm. Furthermore, other violet LEDs are available, and irradiation can be carried out with radiation of a different ultraviolet ray bandwidth. The actinic radiation source preferable in the present invention is a UV-LED, and a UV-LED having a peak wavelength at 350 to 420 nm is particularly preferable.

The ink composition of the present invention is desirably exposed to such actinic radiation for preferably 0.01 to 120 seconds, more preferably 0.01 to 90 seconds, and still more preferably 0.01 to 10 seconds

Furthermore in the present invention, it is desirable for the ink composition to be cured by irradiated for 0.01 to 10 seconds with actinic radiation and with an illumination intensity not grater than 2,000 mW/cm² after discharging the ink composition.

Irradiation conditions and a basic method for irradiation with actinic radiation are disclosed in JP60-132767A. Specifically, a light source is provided on either side of a head unit that includes an ink composition discharge device, and the head unit and the light source are made to scan by a so-called shuttle system. Irradiation with actinic radiation is carried out after a certain time (for example, 0.01 to 0.5 seconds, preferably 0.01 to 0.3 seconds, and more preferably 0.01 to 0.15 seconds) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomers from remaining unreacted.

Moreover, curing may be completed using another light source that is not driven. The pamphlet of International Publication WO 99/54415 discloses, as an irradiation method, a method employing an optical fiber and a method in which a collimated light source is incident on a mirror surface provided on a head unit side face, and a recorded area is irradiated with UV light. For this curing method, the inkjet recording method of the present invention can also be applied.

By employing such an inkjet recording method as described above, it is possible to maintain a uniform dot diameter for a landed ink composition even for various types of support having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomers decreases, and an improvement in adhesion can be expected. Furthermore, although it is possible to discharge all colors and then expose them at the same time, it is preferable to expose one color at a time from the viewpoint of promoting curing.

The inkjet recording method of the present invention may suitably employ the ink set comprising at least one ink composition of the present invention. The order in which colored ink compositions are discharged is not particularly limited, but it is preferable to apply to a recording medium starting from a colored ink composition having a high lightness; when the ink compositions of yellow, cyan, magenta, and black are used, they are preferably applied on top of the recording medium in the order of yellow, cyan, magenta, black. Furthermore, when white is additionally used, they are preferably applied on top of the recording medium in the order of white, yellow, cyan, magenta, black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order of white, light cyan, light magenta, yellow, cyan, magenta, black.

In this way, the ink composition of the present invention may be cured by irradiation with actinic radiation with high sensitivity and form an image on the surface of the support.

When using as an ink set comprising a plurality of the ink compositions of the present invention having a different color, the ink set is not particularly limited as long as it is an ink set having two or more types of the ink compositions of the present invention in combination, the ink set comprising in combination at least one ink composition of the present invention and another ink composition of the present invention or an ink composition other than one of the present invention, and it is preferable for the ink set to comprise at least one ink composition of the present invention having a color selected from cyan, magenta, yellow, black, white, light magenta, and light cyan.

Furthermore, the ink set of the present invention may be suitably used in the inkjet recording method of the present invention.

In order to obtain a full color image using the ink composition of the present invention, it is preferable to use, as the ink set of the present invention, an ink set comprising at least four dark ink compositions of yellow, cyan, magenta, and black, it is more preferable to use an ink set comprising in combination five dark ink compositions of yellow, cyan, magenta, black, and white and at least one ink composition of the present invention, and it is still more preferable to use an ink set comprising in combination five dark ink compositions of yellow, cyan, magenta, black, and white and two, that is, light cyan, and light magenta ink compositions.

The "dark ink composition" referred to in the present invention means an ink composition for which the content of the colorant is more than 1% by mass of the entire ink composition. The colorant is not particularly limited; a known colorant may be used, and examples thereof include a pigment and a disperse dye.

The ink set of the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition=15:1 to 4:1, more preferably 12:1 to 4:1, and still more preferably 10:1 to 4.5:1. Within the above-described range, a vivid full color image with little feeling of graininess can be obtained.

### Examples

Hereinbelow, the present invention will be explained in more detail with reference to Examples and Comparative Examples. However, the present invention should not be construed as being limited by these Examples.

Further, the "parts" in the description below means "parts by mass" unless otherwise particularly specified.

The components used in the present invention are as follows.
- IRGALITE BLUE GLVO (cyan pigment, manufactured by Ciba Specialty Chemicals K. K.)
- CINQUASIA MAGENTA RT-355-D (magenta pigment, manufactured by Ciba Specialty Chemicals K. K.)
- NOVOPERM YELLOW 4G01 (yellow pigment, manufactured by Clariant)
- SPECIAL BLACK 250 (black pigment, manufactured by Ciba Specialty Chemicals K. K.)
- TIPAQUE CR60-2 (white pigment, manufactured by Ishihara Sangyo Kaisha Ltd.)
- SOLSPERSE 32000 (dispersant, manufactured by Noveon)
- SOLSPERSE 41000 (dispersant, manufactured by Noveon)
- V-CAP (N-vinylcaprolactam, manufactured by ISP Inc.)
- SR 9003 (propylene glycol-modified neopentyl glycol diacrylate, manufactured by Sartomer)
- SR 506 (isobornyl acrylate, manufactured by Sartomer)
- SR 531 (cyclic trimethylolpropane formal acrylate, manufactured by Sartomer)
- SR 339 (phenoxyethyl acrylate, manufactured by Sartomer)
- HPPA: KAYARAD R128H (2-hydroxy-3-phenoxypropyl acrylate, manufactured by Nippon Kayaku Co., Ltd.)
- FIRSTCURE ST-1 (polymerization inhibitor, mixture of tris(N-nitroso-N-phenylhydroxyamine) aluminum salt (10% by mass) and phenoxyethyl acrylate (90% by mass), manufactured by Chem First Corporation)
- LUCIRIN TPO (photopolymerization initiator, 2,4,6-trimethylbenzoyldiphenylphosphine oxide, manufactured by BASF)
- IRGACURE 819 (photopolymerization initiator, bis(2,4,6-trimethylbenzoyl)phenyl phosphine oxide, manufactured by Ciba Specialty Chemicals, K. K.)
- IRGACURE 184 (photopolymerization initiator, 1-hydroxycyclohexyl phenyl ketone, manufactured by Ciba-Geigy Ltd.)
- SPEEDCURE ITX (photopolymerization initiator, isopropylthioxanthone, manufactured by LAMBSON)

### (Preparation of Cyan Mill Base A)

First, 300 parts by mass of IRGALITE BLUE GLVO, 600 parts by mass of SR 9003, and 100 parts by mass of SOLSPERSE 32000 were mixed under stirring to obtain a cyan mill base A. Preparation of the cyan mill base A was carried out by dispersing using a Motor Mill M50 disperser (manufactured by Eiger Machinery, Inc.) with zirconia beads having a diameter of 0.65 mm at a peripheral speed of 9 m/s for 4 hours.

### (Preparation of Magenta Mill Base B)

First, 300 parts by mass of CINQUASIA MAGENTA RT-355-D, 600 parts by mass of SR 9003, and 100 parts by mass of SOLSPERSE 32000 were mixed under stirring to obtain a magenta mill base B. Preparation of the magenta mill base B was carried out by dispersing using a Motor Mill M50 disperser (manufactured by Eiger Machinery, Inc.) with zirconia beads having a diameter of 0.65 mm at a peripheral speed of 9 m/s for 10 hours.

### (Preparation of Yellow Mill Base C)

First, 300 parts by mass of NOVOPERM YELLOW 4G01, 600 parts by mass of SR 9003, and 100 parts by mass of SOLSPERSE 32000 were mixed under stirring to obtain a yellow mill base C. Preparation of the yellow mill base C was carried out by dispersing using a Motor Mill M50 disperser (manufactured by Eiger Machinery, Inc.) with zirconia beads having a diameter of 0.65 mm at a peripheral speed of 9 m/s for 10 hours.

### (Preparation of Black Mill Base D)

First, 400 parts by mass of SPECIAL BLACK 250, 500 parts by mass of SR 9003, and 100 parts by mass of SOLSPERSE 32000 were mixed under stirring to obtain a black mill base D. Preparation of the black mill base D was carried out by dispersing using a Motor Mill M50 disperser (manufactured by Eiger Machinery, Inc.) with zirconia beads having a diameter of 0.65 mm at a peripheral speed of 9 m/s for 7 hours.

### (Preparation of White Mill Base E)

First, 500 parts by mass of TIPAQUE CR60-2, 440 parts by mass of SR 9003, and 60 parts by mass of SOLSPERSE 41000 were mixed under stirring to obtain a white mill base E. Preparation of the white mill base E was carried out by dispersing using a Motor Mill M50 disperser (manufactured by Eiger Machinery, Inc.) with zirconia beads having a diameter of 0.65 mm at a peripheral speed of 9 m/s for 4 hours.

### (Preparation of Cyan Mill Base F)

First, 300 parts by mass of IRGALITE BLUE GLVO, 600 parts by mass of SR 531, and 100 parts by mass of SOLSPERSE 32000 were mixed under stirring to obtain a cyan mill base F. Preparation of the cyan mill base F was carried out by dispersing using a Motor Mill M50 disperser (manufactured by Eiger Machinery, Inc.) with zirconia beads having a diameter of 0.65 mm at a peripheral speed of 9 m/s for 4 hours.

### <Method for Preparing Ink Composition>

The components described in Tables 1 to 3 were mixed and stirred to obtain the respective ink compositions described in Examples 1 to 17 and Comparative Examples 1 to 4.

The surface tension of the ink composition was measured by a Wilhelmy method at a liquid temperature of 25°C using a surface tensiometer (CBVP-Z manufactured by Kyowa Interface Science Co., Ltd.)

### <Inkjet Recording Method 1>

Inkjet head Q-class Sapphire QS-256/10 (manufactured by FUJIFILM DIMATIX, Inc., number of nozzles of 256, liquid droplet amount 10 pL to 30 pL, frequency 15 kHz to 50 kHz, and ink-philic treatment of the ink discharging side surface of nozzle plate: silicon oxide) having a piezo type nozzle plate that has been subjected to an ink-philic treatment

Using a head scanning type inkjet recording experimental apparatus with 2 heads for each color, in total 8 heads, recording was carried out on a recording medium. The ink supply system was constituted with a main tank, a supply pipe, an ink supply tank located adjacent to an inkjet head, a filter, and an inkjet head, and insulated and warmed up from the ink supply tank to the inkjet head. Each of temperature sensors was provided around the ink supply tank and the nozzles of the inkjet head, and the temperature was controlled so that the temperature of the nozzle portion was always 45°C±2°C. The piezo type inkjet head was driven at a multi-size dot of 10 to 30 pl (3-stage variation of 10 pL, 20 pL, and 30 pL), and the inkjet head unit performed a shuttle scanning driving so as to print in both directions perpendicular to the transporting direction of the support. The substrate was transported in the direction perpendicular to the scan shuttle direction and was driven so as to print at a resolution of 450x450 dpi, respectively. SUB ZERO 085 H bulb lamp unit manufactured by Integration Technology, as the ultraviolet ray lamp, was installed at both ends of a head scanning unit. The distance between the centers of the inkjet heads was placed, in all of 8 heads, at a span of 3.2 cm, and the distance between the center of the lamp unit and the center of the nearest inkjet head was placed at 15 cm.

The lamp position, the main scanning speed, and the injection frequency were adjusted so that irradiation from each of the lamps might start within 0.7 seconds from the ink landing on the recording medium, and the light was condensed so that the irradiation intensity might be 750 mW/cm².

A total of 10 sheets of monochromatic block images with a size of 150 cmx250 cm were drawn to form images. The marginal portion of the image was set so that the nozzle check pattern might be drawn, and how many nozzles were missing nozzles for each pass was able to be checked.

Using a UV power Map (manufactured by EIT Instrumentation & Technology), the sum of UVA, UVB, and UVC regions (region having a wavelength of 240 to 400 nm) was taken as each of the exposure area illumination intensity and the accumulated exposure amount.

### <Inkjet Recording Method 2>

Inkjet recording was carried out in the same manner as in the inkjet recording method 1, except that the inkjet head was changed to Spectra SE-128 AA (manufactured by FUJIFILM DIMATIX, Inc., number of nozzles of 128, liquid droplet amount 30 pL, 40 kHz, ink-philic treatment of the ink discharging side surface of the nozzle plate: gold).

### <Inkjet Recording Method 3>

Inkjet recording was carried out in the same manner as in the inkjet recording method 1, except that the inkjet head was changed to Spectra GalaxyPH (manufactured by FUJIFILM DIMATIX, Inc, number of nozzles of 256, liquid droplet amount 28 pL, 20 kHz, ink-philic treatment of the ink discharging side surface of the nozzle plate: stainless steel).

### <Evaluation of Glossiness>

The glossiness of the image obtained in accordance with the above-mentioned inkjet recording method was measured by using a glossmeter at a measurement angle of 60°, based on JIS Z8741. The evaluation criteria are as follows.
4: Degree of gloss which is not less than 20
3: Degree of gloss which is not less than 15 and less than 20
2: Degree of gloss which is not less than 10 and less than 15
1: Degree of gloss which is less than 10
Evaluation: Degree of gloss which is not less than evaluation-3 is acceptable in practical use.

### <Evaluation of Stripe Unevenness>

The stripe unevenness of the image obtained in according with the above-mentioned inkjet recording method was evaluated with the naked eye. The evaluation criteria are as follows.
4: The stripe unevenness cannot be perceived even at a distance of 20 cm from the image.
3: The stripe unevenness can be perceived at a distance of 20 cm from the image, but cannot be perceived at a distance 1 m from the image.
2: The stripe unevenness can be perceived at a distance of 1 m from the image, but cannot be perceived at a distance 2 m from the image.
1: The stripe unevenness can be perceived even at a distance of 2 m from the image.
Evaluation: The stripe unevenness which is not less than evaluation-3 is acceptable in practical use.

### <Evaluation of Nozzle Clogging>

The total number of nozzle clogging of each printed material of a total of 10 sheets of block images with a size of 150 cmx250 cm drawn was averaged, and evaluated in accordance with the following criteria.
4: Number of nozzle clogging being 0 to 2
3: Number of nozzle clogging being 3 to 5
2: Number of nozzle clogging being 5 to 10
1: Number of nozzle clogging being not less than 10.
Evaluation: The number of nozzle clogging which is not less than evaluation-3 is acceptable in practical use.

### <Comparative Example 5>

Using an inkjet recording device having an inkjet head CA4 (manufactured by Toshiba Tec Corporation) with a nozzle plate that had not been subjected to an ink-philic treatment, recording by using the ink composition used in Example 1 onto a recording medium was carried out while fixing the amount of the discharged liquid droplets at 42 pL and the frequency at 6.2 kHz; the head temperature was adjusted so that the ink viscosity might be 9 cP; and the missing dots or the scattering of the ink when printing continuously over one hour was observed with the naked eye and evaluated in accordance with the evaluation criteria above. As a result, the missing dots or the scattering of the ink occurred 10 or more times.

**[Table 1]**

| | | | Example 1 | Example 2 | Example 3 | Example 4 | Example 5 |
|---|---|---|---|---|---|---|---|
| | | | Cyan | Magenta | Yellow | Black | White |
| Pigment | | Cyan pigment (IRGALITE BLUE GLVO) | 2.46 | | - | - | - |
| | | Magenta pigment (CINOUASIA MAGENTA RT355D) | - | 4.8 | - | - | - |
| | | Yellow pigment (NOVOPERM YELLOW 4G01) | - | - | 2.4 | - | - |
| | | Black pigment (SPECIAL BLACK 250) | - | - | - | 3.6 | - |
| | | White pigment (TIPAQUE CR60-2) | - | - | - | - | 15 |
| Dispersant | | SOLSPERSE 32000 | 0.82 | 1.6 | 0.8 | 0.9 | - |
| | | SOLSPERSE 4100 | - | - | - | - | 1.8 |
| Monomers | Component A-1) | Cyclic trimethylol propane formal acrylate | 50 | 46 | 50 | 48 | 35 |
| | Component A-2) | N-Vinyl caprolactam | 15 | 15 | 15 | 15 | 15 |
| | Component A-3) | PO-modified neopentyl glycol diacrylate | 4.82 | 5.7 | 4.9 | 5.6 | 4.5 |
| | | 3-Methylpentane diol diacrylate | 7.4 | 7 | 7 | 7 | 12 |
| | Other monomers | Isobornyl acrylate | - | - | - | - | - |
| | | Phenoxyethyl acrylate | - | - | - | - | - |
| | | Triethylene glycol divinyl ether | 3.2 | 3.2 | 3.2 | 3.2 | 3.2 |
| Polymerizati on inhibitor | | FIRSTCURE ST-1 | 0.5 | 0.5 | 0.5 | 0.5 | 0.5 |
| Component B) Polymerization initiator | | IRGACURE 184 | 3.8 | 4.2 | 4.2 | 4.2 | 3.2 |
| | | LUCIRIN TPO | 4.8 | 4.8 | 4.8 | 4.8 | 4.8 |
| | | IRGACURE 819 | 4 | 4 | 4 | 4 | 4 |
| | | SPEEDCURE ITX | 3.2 | 3.2 | 3.2 | 3.2 | 1 |
| Total parts by mass | | | 100.00 | 100.00 | 100.00 | 100.00 | 100.00 |
| Ink surface tension [mN/m] | | | 35 | 35.7 | 35.5 | 35.4 | 34.7 |
| Performance evaluation Results | Inkjet recording method 1 (QS-256/10 silicon oxide plate) | Glossiness | 4 | 4 | 4 | 4 | 4 |
| | | Image stripe | 4 | 4 | 4 | 4 | 4 |
| | | Nozzle clogging | 4 | 4 | 4 | 4 | 4 |
| | Inkjet recording method 2 (SE-30 gold plate) | Glossiness | 4 | 4 | 4 | 4 | 4 |
| | | Image stripe | 4 | 4 | 4 | 4 | 4 |
| | | Nozzle clogging | 4 | 4 | 4 | 4 | 4 |
| | Inkjet recording method 3 (Galaxy PH stainless steel plate) | Glossiness | 4 | 4 | 4 | 4 | 4 |
| | | Image stripe | 4 | 4 | 4 | 4 | 4 |
| | | Nozzle clogging | 4 | 4 | 4 | 4 | 4 |

**[Table 2]**

| | | | Example 1 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|
| | | | Cyan | Cyan | Cyan | Cyan | Cyan | Cyan | Cyan | Cyan | Cyan | Cyan | Cyan | Cyan | Cyan |
| Pigment | | Cyan pigment (IRGALITE BLUE GLVO) | 2.46 | 2.46 | 2.46 | 2.46 | 2.46 | 2.46 | 2.46 | 2.46 | 2.46 | 2.46 | 2.46 | 2.46 | 2.46 |
| Dispersant | | SOLSPERSE 32000 | 0.82 | 0.82 | 0.82 | 0.82 | 0.82 | 0.82 | 0.82 | 0.82 | 0.82 | 0.82 | 0.82 | 0.82 | 0.82 |
| Monomers | Component A-1) | Cyclic trimethylol propane formal acrylate | 50 | 33 | 50 | 20 | 17.2 | 14 | 75.2 | 50 | 50 | 50 | 39.6 | 34.6 | 50 |
| | Component A-2) | N-Vinyl caprolactam | 15 | 15 | 15 | 15 | 12.8 | 8 | - | 18.6 | 17.8 | 17.1 | 25 | 30 | 15 |
| | Component A-3) | PO-modified neopentyl glycol diacrylate | 4.82 | 8.82 | 4.82 | 4.82 | 4.82 | 4.82 | 4.82 | 4.82 | 4.82 | 4.82 | 4.82 | 4.82 | - |
| | | 3-Methylpentane diol diacrylate | 7.4 | 15 | 7 | 7 | 3 | | | 7.4 | 7.4 | 7.4 | 7.4 | 7.4 | - |
| | Other monomers | Isobornyl acrylate | - | 5 | - | - | - | - | - | - | - | - | - | - | - |
| | | Phenoxyethyl acrylate | - | - | - | 30 | 40 | 50 | - | - | - | - | - | | - 11.82 |
| | | Triethylene glycol divinyl ether | 3.2 | 3.2 | 3.2 | 3.2 | 3.2 | 3.2 | 3.2 | 3.2 | 3.2 | 3.2 | 3.2 | 3.2 | 3.2 |
| Polymerization inhibitor | | FIRSTCURE ST-1 | 0.5 | 0.5 | 0.5 | 0.5 | 0.5 | 0.5 | 0.5 | 0.5 | 0.5 | 0.5 | 0.5 | 0.5 | 0.5 |
| Component B) Polymerization initiator | | IRGACURE 184 | 3.8 | 4.2 | 4.2 | 4.2 | 3.2 | 4.2 | 3.2 | 4.2 | 4.2 | 4.2 | 4.2 | 4.2 | 4.2 |
| | | LUCIRIN TPO | 4.8 | 4.8 | 4.8 | 4.8 | 4.8 | 4.8 | 4.8 | 4.8 | 4.8 | 9.5 | 4.8 | 4.8 | 4.8 |
| | | IRGACURE 819 | 4 | 4 | 4 | 4 | 4 | 4 | 4 | - | 4 | - | 4 | 4 | 4 |
| | | SPEEDCURE ITX | 3.2 | 3.2 | 3.2 | 3.2 | 3.2 | 3.2 | 1 | 3.2 | - | - | 3.2 | 3.2 | 3.2 |
| Total parts by mass | | | 100.00 | 100.00 | 100.00 | 100.00 | 100.00 | 100.00 | 100.00 | 100.00 | 100.00 | 100.00 | 100.00 | 100.00 | 100.00 |
| Ink surface tension [mN/m] | | | 35 | 34 | 36.5 | 37.3 | 38 | 38.9 | 34.8 | 35.9 | 35.8 | 35.7 | 36.2 | 36.5 | 36.5 |
| Performance evaluation Results | Inkjet recording method 1 (QS-256/10 silicon oxide plate) | Glossiness | 4 | 4 | 4 | 4 | 3 | 3 | 4 | 4 | 4 | 4 | 4 | 3 | 3 |
| | | Image stripe | 4 | 4 | 4 | 4 | 4 | 3 | 3 | 4 | 4 | 3 | 4 | 4 | 3 |
| | | Nozzle clogging | 4 | 3 | 4 | 4 | 4 | 4 | 3 | 4 | 4 | 4 | 4 | 4 | 4 |
| | Inkjet | Glossiness | 4 | 4 | 4 | 4 | 3 | 3 | 4 | 4 | 4 | 4 | 4 | 4 | 3 |
| | recording method 2 (SE-30 gold plate) | Image stripe | 4 | 4 | 4 | 4 | 4 | 3 | 3 | 4 | 4 | 3 | 4 | 4 | 4 |
| | | Nozzle clogging | 4 | 3 | 4 | 4 | 4 | 4 | 4 | 4 | 4 | 4 | 4 | 4 | 4 |
| | Inkjet recording method 3 (Galaxy PH stainless steel plate) | Glossiness | 4 | 4 | 4 | 4 | 3 | 3 | 3 | 4 | 4 | 4 | 4 | 3 | 3 |
| | | Image stripe | 4 | 4 | 4 | 4 | 4 | 3 | 3 | 4 | 4 | 3 | 4 | 4 | 4 |
| | | Nozzle clogging | 4 | 3 | 4 | 4 | 4 | 4 | 4 | 4 | 4 | 4 | 4 | 4 | 4 |

**[Table 3]**

| | | | Example 1 | Comparative Example 1 | Comparative Example 2 | Comparative Example 3 | Comparative Example 4 |
|---|---|---|---|---|---|---|---|
| | | | Cyan | Cyan | Cyan | Cyan | Cyan |
| Pigment | | Cyan pigment (IRGALITE BLUE GLVO) | 2.46 | 2.46 | 2.46 | 2.46 | 2.46 |
| Dispersant | | SOLSPERSE 32000 | 0.82 | 0.82 | 0.82 | 0.82 | 0.82 |
| Monomers | Component A-1) | Cyclic trimethylol propane formal acrylate | 50 | - | 30 | 10 | 10 |
| | Component A-2) | N-Vinyl caprolactam | 15 | 20 | 10 | 10 | 15 |
| | Component A-3) | PO-modified neopentyl glycol diacrylate | 4.82 | 4.82 | 4.82 | 4.82 | 4.82 |
| | | 3-Methylpentane diol diacrylate | 7.4 | - | 7.4 | 7.4 | 7.4 |
| | Other monomers | Isobornyl acrylate | - | - | 25 | 45 | - |
| | | Phenoxyethyl acrylate | - | 55.6 | - | - | - |
| | | Triethylene glycol divinyl ether | - | - | - | - | 20 |
| | | Cyclic trimethylol propane formal acrylate | 3.2 | - | 3.2 | 3.2 | 3.2 |
| Polymerization inhibitor | | FIRSTCURE ST-1 | 0.5 | 0.5 | 0.5 | 0.5 | 0.5 |
| Component B) Polymerization initiator | | IRGACURE 184 | 3.8 | 3.8 | 3.8 | 3.8 | 3.8 |
| | | LUCIRIN TPO | 4.8 | 4.8 | 4.8 | 4.8 | 4.8 |
| | | IRGACURE 819 | 4 | 4 | 4 | 4 | 4 |
| | | SPEEDCURE ITX | 3.2 | 3.2 | 3.2 | 3.2 | 3.2 |
| Total parts by mass | | | 100.00 | 100.00 | 100.00 | 100.00 | 80.00 |
| Ink surface tension [mN/m] | | | 35 | 38.8 | 33.2 | 32.1 | 39.7 |
| Performance evaluation Results | Inkjet recording method 1 (QS-256/10 silicon oxide plate) | Glossiness | 4 | 1 | 4 | 4 | 1 |
| | | Image stripe | 4 | 2 | 4 | 3 | 2 |
| | | Nozzle clogging | 4 | 4 | 2 | 1 | 4 |
| | Inkjet recording method 2 (SE-30 gold plate) | Glossiness | 4 | 1 | 4 | 4 | 1 |
| | | Image stripe | 4 | 3 | 4 | 3 | 2 |
| | | Nozzle clogging | 4 | 4 | 2 | 1 | 4 |
| | Inkjet recording method 3 (Galaxy PH stainless steel plate) | Glossiness | 4 | 1 | 4 | 4 | 1 |
| | | Image stripe | 4 | 3 | 4 | 2 | 2 |
| | | Nozzle clogging | 4 | 4 | 1 | 1 | 4 |

According to the inkjet recording method of the present invention, an excellent image having high glossiness and no marked image stripe unevenness, and being free from decoloration due to nozzle clogging can be obtained.

## Claims

1. An inkjet recording method comprising:
an image-forming step wherein an ink composition containing a compound represented by the formula (1) (Component A-1) and a polymerization initiator (Component B), and having a surface tension at 25°C of 34.0 to 39.0 mN/m, is discharged onto a recording medium from an inkjet head having a nozzle plate, wherein the ink discharging side surface of the nozzle plate has been subjected to an ink-philic treatment, to form an image, and
a curing step wherein the discharged ink composition is irradiated with actinic radiation. 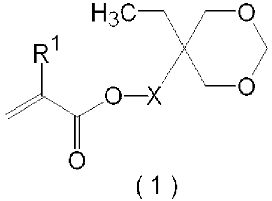
in the formula (1), R¹ represents a hydrogen atom or a methyl group, and X represents a single bond or a divalent linkage;
wherein the nozzle plate includes a layer formed of at least one selected from the group consisting of diamond-like carbon, metal, metal oxide, semi-metal nitride, and metal nitride on at least a part of the ink discharging side surface, wherein the metal is selected from the group consisting of gold, iron, stainless steel, titanium, tantalum, platinum, rhodium, nickel and chromium.

2. The inkjet recording method according to claim 1, wherein the ink composition further comprises an N-vinyllactam (Component A-2).

3. The inkjet recording method according to claim 1 or 2, wherein the ink composition further comprises a diacrylate of a hydrocarbon diol having 5 to 10 carbon atoms (Component A-3).

4. The inkjet recording method according to any one of claims 1 to 3, wherein the ejection volume of the ink composition in the image-forming step is not smaller than 7 pL and not larger than 100 pL.

5. The inkjet recording method according to any one of claims 1 to 4, wherein the ejection volume of the ink composition in the image-forming step is not smaller than 7 pL and not larger than 40 pL.

6. The inkjet recording method according to any one of claims 1 to 5, wherein the discharge frequency in the image-forming step is 8 to 80 kHz.

7. The inkjet recording method according to any one of claims 1 to 6, wherein the image formation in the image-forming step is a gray-scale printing in which a plurality of ink compositions having different ejection volumes is discharged in combination, and the ejection volume varies in 3 stages to 8 stages.

8. The inkjet recording method according to any one of claims 1 to 7, wherein the image formation in the image-forming step is carried out in a shuffle scanning mode for operating the inkjet head in both directions.

9. The inkjet recording method according to any one of claims 1 to 8, wherein the nozzle plate includes a layer formed of at least one selected from the group consisting of diamond-like carbon, metal, metal oxide, semi-metal nitride, and metal nitride on at least a part of the ink discharging side surface.

10. The inkjet recording method according to any one of claims 1 to 9, wherein the nozzle plate includes a layer formed of at least one selected from the group consisting of gold, iron, stainless steel, titanium, tantalum, platinum, rhodium, nickel, chromium, silicon nitride, and aluminum nitride on at least a part of the ink discharging side surface.

11. The inkjet recording method according to any one of claims 1 to 10, wherein the nozzle plate includes a layer formed of at least one selected from the group consisting of gold and stainless steel on at least a part of the ink discharging side surface.

12. The inkjet recording method according to any one of claims 1 to 11, wherein the nozzle plate includes a layer formed of gold on at least a part of the ink discharging side surface.

13. A printed material recorded by the inkjet recording method according to any one of claims 1 to 12.

## Patentansprüche

1. Tintentstrahl-Aufzeichnungsverfahren aufweisend:
einen Abbildungs-Erzeugungsschritt, bei dem eine Tintenzusammensetzung, die eine Verbindung, die durch die Formel (1) (Komponente A-1) repräsentiert wird, und einen Polymerisationsinitiator (Komponente B) enthält, und die eine Oberflächenspannung bei 25 °C von 34,0 bis 39,0 mN/m hat, aus einem Tintenstrahlkopf mit einer Düsenplatte auf ein Aufzeichnungsmedium ausgestoßen wird, wobei die Tintenausstoßseitenoberfläche der Düsenplatte einer Tintenphilierungs-Behandlung unterzogen wurde, um ein Abbild zu erzeugen, und
einen Härtungsschritt, bei dem die ausgestoßene Tintenzusammensetzung mit aktinischer Strahlung bestrahlt wird, 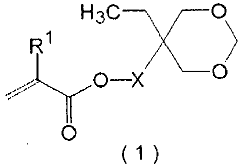
in Formel (1) repräsentiert R¹ ein Wasserstoffatom oder eine Methylgruppe, und X repräsentiert eine Einfachbindung oder eine zweiwertige Verknüpfung;
wobei die Düsenplatte auf mindestens einem Teil der Tintenausstoßseitenoberfläche eine Schicht aufweist, die ausgebildet ist aus mindestens einem Material, das ausgewählt ist aus der Gruppe, die aus diamantartigem Kohlenstoff, Metall, Metalloxid, Halbmetallnitrid und Metallnitrid besteht, wobei das Metall ausgewählt ist aus der Gruppe, die aus Gold, Eisen, rostfreiem Stahl, Titan, Tantal, Platin, Rhodium, Nickel und Chrom besteht.

2. Tintentstrahl-Aufzeichnungsverfahren nach Anspruch 1, bei dem die Tintenzusammensetzung außerdem ein N-Vinyl-lactam (Komponente A-2) aufweist.

3. Tintentstrahl-Aufzeichnungsverfahren nach Anspruch 1 oder 2, bei dem die Tintenzusammensetzung außerdem ein Diacrylat eines Kohlenwasserstoff-Diols mit 5 bis 10 Kohlenstoffatomen (Komponente A-3) aufweist.

4. Tintentstrahl-Aufzeichnungsverfahren nach einem der Ansprüche 1 bis 3, bei dem das Ausstoßvolumen der Tintenzusammensetzung in dem Abbildungs-Erzeugungsschritt nicht kleiner als 7 pL und nicht größer als 100 pL ist.

5. Tintentstrahl-Aufzeichnungsverfahren nach einem der Ansprüche 1 bis 4, bei dem das Ausstoßvolumen der Tintenzusammensetzung in dem Abbildungs-Erzeugungsschritt nicht kleiner als 7 pL und nicht größer als 40 pL ist.

6. Tintentstrahl-Aufzeichnungsverfahren nach einem der Ansprüche 1 bis 5, bei dem die Ausstoßfrequenz in dem Abbildungs-Erzeugungsschritt 8 bis 80 kHz beträgt.

7. Tintentstrahl-Aufzeichnungsverfahren nach einem der Ansprüche 1 bis 6, bei dem die Abbildungserzeugung in dem Abbildungs-Erzeugungsschritt ein Graustufendruck ist, bei dem eine Mehrzahl von Tintenzusammensetzungen mit verschiedenen Ausstoßvolumina zusammen ausgestoßen wird und das Ausstoßvolumen in 3 Stufen bis 8 Stufen variiert.

8. Tintentstrahl-Aufzeichnungsverfahren nach einem der Ansprüche 1 bis 7, bei dem die Abbildungserzeugung in dem Abbildungs-Erzeugungsschritt in einem Shuffle-Scan-Modus zum Agieren des Tintenstrahlkopfs in beiden Richtungen ausgeführt wird.

9. Tintentstrahl-Aufzeichnungsverfahren nach einem der Ansprüche 1 bis 8, bei dem die Düsenplatte auf mindestens einem Teil der Tintenausstoßseitenoberfläche eine Schicht aufweist, die ausgebildet ist aus mindestens einem Material, das ausgewählt ist aus der Gruppe, die aus diamantartigem Kohlenstoff, Metall, Metalloxid, Halbmetallnitrid und Metallnitrid besteht.

10. Tintentstrahl-Aufzeichnungsverfahren nach einem der Ansprüche 1 bis 9, bei dem die Düsenplatte auf mindestens einem Teil der Tintenausstoßseitenoberfläche eine Schicht aufweist, die ausgebildet ist aus mindestens einem Material, das ausgewählt ist aus der Gruppe, die aus Gold, Eisen, rostfreiem Stahl, Titan, Tantal, Platin, Rhodium, Nickel, Chrom, Siliziumnitrid und Aluminiumnitrid besteht.

11. Tintentstrahl-Aufzeichnungsverfahren nach einem der Ansprüche 1 bis 10, bei dem die Düsenplatte auf mindestens einem Teil der Tintenausstoßseitenoberfläche eine Schicht aufweist, die ausgebildet ist aus mindestens einem Material, das ausgewählt ist aus der Gruppe, die aus Gold und rostfreiem Stahl besteht.

12. Tintentstrahl-Aufzeichnungsverfahren nach einem der Ansprüche 1 bis 11, bei dem die Düsenplatte auf mindestens einem Teil der Tintenausstoßseitenoberfläche eine Schicht aufweist, die aus Gold ausgebildet ist.

13. Druckerzeugnis, auf dem mittels des Tintentstrahl-Aufzeichnungsverfahrens nach einem der Ansprüche 1 bis 12 aufgezeichnet wurde.

## Revendications

1. Procédé d'enregistrement par jet d'encre, comprenant :
une étape de formation d'image, dans lequel une composition d'encre contenant un composé représenté par la formule (1) (composant A-1) et un initiateur de polymérisation (composant B), et présentant une tension superficielle à 25 °C de 34,0 à 39,0 mN/m, est déchargée sur un support d'enregistrement à partir d'une tête à jet d'encre présentant une plaque à buses, dans lequel la surface côté déchargement d'encre de la plaque à buses a été soumise à un traitement attirant l'encre, destinée à former une image, et
une étape de durcissement, dans lequel la composition d'encre déchargée est irradiée avec un rayonnement actinique 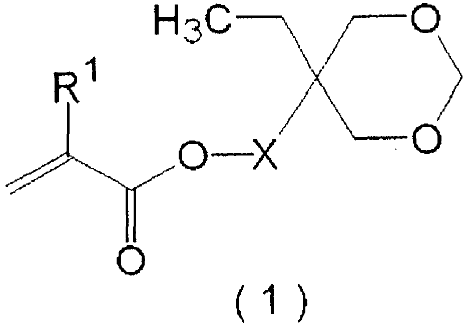 dans la formule (1), R¹ représente un atome d'hydrogène ou un groupe méthyle, et X représente une liaison simple ou un groupe de liaison divalent ;
dans lequel la plaque à buses inclut une couche formée d'au moins un élément sélectionné parmi le groupe consistant en du carbone de type diamant, du métal, un oxyde métallique, un nitrure semi-métallique et un nitrure métallique sur au moins une partie de la surface côté déchargement de l'encre, dans lequel le métal est sélectionné parmi le groupe consistant en l'or, le fer, l'acier inoxydable, le titane, le tantale, le platine, le rhodium, le nickel et le chrome.

2. Procédé d'enregistrement par jet d'encre selon la revendication 1, dans lequel la composition d'encre comprend en outre un N-vinyl-lactame (composant A-2).

3. Procédé d'enregistrement par jet d'encre selon la revendication 1 ou 2, dans lequel la composition d'encre comprend en outre un diacrylate d'un diol hydrocarboné contenant de 5 à 10 atomes de carbone (composant A-3).

4. Procédé d'enregistrement par jet d'encre selon l'une quelconque des revendications 1 à 3, dans lequel le volume d'éjection de la composition d'encre dans l'étape de formation d'image n'est pas inférieur à 7 pL et n'est pas supérieur à 100 pL.

5. Procédé d'enregistrement par jet d'encre selon l'une quelconque des revendications 1 à 4, dans lequel le volume d'éjection de la composition d'encre dans l'étape de formation d'image n'est pas inférieur à 7 pL et n'est pas supérieur à 40 pL.

6. Procédé d'enregistrement par jet d'encre selon l'une quelconque des revendications 1 à 5, dans lequel la fréquence de déchargement dans l'étape de formation d'image est égale à 8 à 80 kHz.

7. Procédé d'enregistrement par jet d'encre selon l'une quelconque des revendications 1 à 6, dans lequel la formation d'image dans l'étape de formation d'image est une impression d'échelle de gris, où une pluralité de compositions d'encre présentant des volumes d'éjection différents sont déchargées en combinaison, et le volume d'éjection varie de 3 stades à 8 stades.

8. Procédé d'enregistrement par jet d'encre selon l'une quelconque des revendications 1 à 7, dans lequel la formation d'image dans l'étape de formation d'image est réalisée suivant un mode de balayage mélangé destiné à faire fonctionner la tête à jet d'encre dans les deux directions.

9. Procédé d'enregistrement par jet d'encre selon l'une quelconque des revendications 1 à 8, dans lequel la plaque à buses inclut une couche formée d'au moins un élément sélectionné parmi le groupe consistant en du carbone de type diamant amorphe, du métal, un oxyde métallique, un nitrure semi-métallique et un nitrure métallique sur au moins une partie de la surface côté déchargement de l'encre.

10. Procédé d'enregistrement par jet d'encre selon l'une quelconque des revendications 1 à 9, dans lequel la plaque à buses inclut une couche formée d'au moins un élément sélectionné parmi le groupe consistant en l'or, le fer, l'acier inoxydable, le titane, le tantale, le platine, le rhodium, le nickel, le chrome, le nitrure de silicium, et le nitrure d'aluminium sur au moins une partie de la surface côté déchargement de l'encre.

11. Procédé d'enregistrement par jet d'encre selon l'une quelconque des revendications 1 à 10, dans lequel la plaque à buses inclut une couche formée d'au moins un élément sélectionné parmi le groupe consistant en l'or et l'acier inoxydable sur au moins une partie de la surface côté déchargement de l'encre.

12. Procédé d'enregistrement par jet d'encre selon l'une quelconque des revendications 1 à 11, dans lequel la plaque à buses inclut une couche formée d'or sur au moins une partie de la surface côté déchargement de l'encre.

13. Matériau imprimé enregistré par le procédé d'enregistrement par jet d'encre selon l'une quelconque des revendications 1 à 12.
